# EUROPÄISCHE PATENTSCHRIFT

(11) **EP 4 194 802 B1**
(45) Veröffentlichungstag und Bekanntmachung des Hinweises auf die Patenterteilung: **07.10.2026**
(21) Anmeldenummer: 22210147.9
(22) Anmeldetag: 29.11.2022
(51) Int. Cl.: G01B 11/16, G01B 11/26, F03D 17/00, G01M 5/00

(54) **SENSORANORDNUNG ZUM ERFASSEN MINDESTENS EINER ERSTEN TORSION EINES ROTORBLATTS EINER WINDKRAFTANLAGE**
SENSOR ARRANGEMENT FOR DETECTING AT LEAST A FIRST TORSION OF A ROTOR BLADE OF A WIND TURBINE
ENSEMBLE CAPTEUR POUR DÉTECTER AU MOINS UNE PREMIÈRE TORSION D'UNE PALE DE ROTOR D'UNE ÉOLIENNE

(30) Priorität: 08.12.2021 DE 102021213938
(43) Veröffentlichungstag der Anmeldung: 14.06.2023
(73) Patentinhaber: Dr. Johannes Heidenhain GmbH, 83301 Traunreut (DE)
(72) Erfinder: Meißner, Markus, 83236 Übersee (DE); Langrieger, Franz, 83308 Trostberg (DE); Reichhuber, Siegfried, 83371 Stein a. d. Traun (DE); Gilg, Stefan, 83308 Trostberg (DE)

(56) Entgegenhaltungen:
- WO-A1-2021/064243
- WO-A1-92/21933
- DE-A1- 10 219 664
- DE-A1- 102010 005 665
- DE-A1- 102017 131 388
- DE-A1- 3 405 886
- US-A- 3 938 890
- US-A1- 2010 053 615

## Beschreibung

### GEBIET DER TECHNIK

Die vorliegende Erfindung betrifft eine Sensoranordnung zum Erfassen mindestens einer ersten Torsion eines Rotorblatts einer Windkraftanlage nach dem Oberbegriff des Anspruchs 1.

### STAND DER TECHNIK

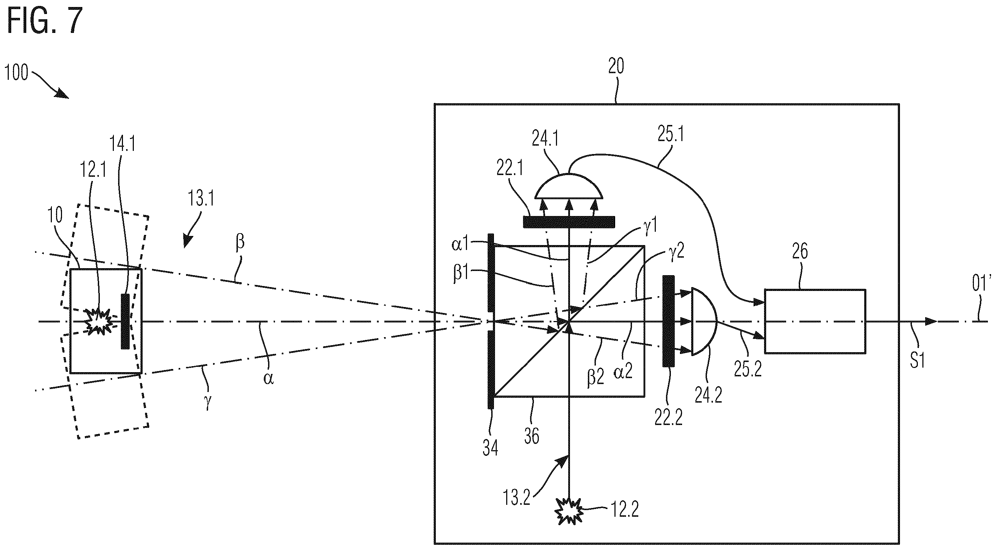

EP 3 467 463 A1 offenbart einen Torsionssensor zum Bestimmen eines auf ein Objekt wirkenden Torsionsmoments. Der Torsionssensor umfasst eine Strahlungsquelle und einen Strahlungsdetektor, die voneinander beabstandet an dem Objekt angeordnet sind. Die Strahlungsquelle strahlt ein Strahlungsbündel elektromagnetischer Strahlung zu dem Strahlungsdetektor ab. Der Strahlungsdetektor erfasst wenigstens eine von einem Auftreffbereich, in dem das Strahlungsbündel den Strahlungsdetektor trifft, abhängige Messgröße. Bei einem in den Figuren 7 bis 9 gezeigten Beispiel erfolgt die Verwendung von linear polarisiertem Licht, dessen Orientierung für die Torsionsmessung herangezogen wird.

DE 10 2016 125 730 A1 offenbart eine gattungsmäßige Sensoranordnung, bei der eine Torsionsmessung über die Messung der Drehung einer Polarisation erfolgt. Es wird keine Freistrahlstrecke genutzt. Stattdessen wird Licht von einer Sendeeinheit zu einer Empfangseinheit über eine Glasfaser geleitet.

Darüber hinaus sind im Stand der Technik Kamera-basierte Systeme für eine Torsionsmessung bekannt. Diese sind im Allgemeinen relativ verschmutzungsempfindlich und haben eine relativ geringe Bandbreite der Messung.

US 2010/053615 A1 offenbart eine Sensoranordnung nach dem Oberbegriff des Anspruchs 1.

Weitere Sensoranordnungen zum Erfassen eines Torsionswinkels bzw. einer Drehmomentbelastung mit einer oder mehreren Lichtquellen und mehreren Detektoren sind in US 3 938 890 A, DE 10 2017 131388 A1 und WO 92/21933 A1 offenbart.

### ZUSAMMENFASSUNG DER ERFINDUNG

Der Erfindung liegt die Aufgabe zugrunde, eine Sensoranordnung zum Erfassen mindestens einer ersten Torsion eines Rotorblatts einer Windkraftanlage anzugeben, die einfach und robust aufgebaut ist und mit der eine präzise Detektion des Rotorblatts ermöglicht wird.

Diese Aufgabe wird erfindungsgemäß durch eine Sensoranordnung mit den Merkmalen des Anspruchs 1 gelöst.

Die erfindungsgemäß ausgebildete Sensoranordnung dient zum Erfassen mindestens einer ersten Torsion eines Rotorblatts einer Windkraftanlage. Die Sensoranordnung weist eine erste Lichtquelle zum Erzeugen von Licht und einen in Lichtausbreitungsrichtung nach der ersten Lichtquelle angeordneten ersten sendeseitigen Polarisator zum Erzeugen von linear polarisiertem Licht als erstes Sendelicht auf. Die Sensoranordnung weist ein erstes Detektorelement und ein zweites Detektorelement auf. Das erste Detektorelement und das zweite Detektorelement sind derart angeordnet und ausgebildet, dass sie zumindest das erste Sendelicht empfangen. Die Sensoranordnung weist einen in Lichtausbreitungsrichtung vor dem ersten Detektorelement angeordneten ersten empfangsseitigen Polarisator und einen in Lichtausbreitungsrichtung vor dem zweiten Detektorelement angeordneten zweiten empfangsseitigen Polarisator auf. Eine Orientierung einer Polarisationsebene des ersten empfangsseitigen Polarisators und eine Orientierung einer Polarisationsebene des zweiten empfangsseitigen Polarisators sind voneinander verschieden. Die Sensoranordnung weist eine zweite Lichtquelle zum Erzeugen von unpolarisiertem Licht als zweites Sendelicht auf. Das erste Detektorelement und das zweite Detektorelement sind derart angeordnet und ausgebildet, dass sie das zweite Sendelicht empfangen.

Vorzugsweise sind die erste und zweite Lichtquelle in einer Richtung senkrecht zu einer Längsachse des Rotorblatts nebeneinander angeordnet.

Zwischen der zweiten Lichtquelle und einem durch das erste und zweite Detektorelement gebildeten Paar ist kein sendeseitiger Polarisator angeordnet. Durch die zweite Lichtquelle (bzw. das zweite Sendelicht in Form von unpolarisiertem Licht) kann ein Abgleich eines von dem ersten Detektorelement erzeugten ersten Messsignals und eines von dem zweiten Detektorelement erzeugten zweiten Messsignals erfolgen.

Die Sensoranordnung hat einen ersten bis dritten Betriebsmodus. Die Sensoranordnung ist dazu ausgebildet, zwischen dem ersten bis dritten Betriebsmodus zyklisch umzuschalten. Dadurch kann der vorgenannte Abgleich wiederholt (fortlaufend) durchgeführt werden. Dies ist insbesondere während des Langzeitbetriebs der Sensoranordnung von Vorteil.

Im ersten Betriebsmodus sind die erste und zweite Lichtquelle ausgeschaltet.

Im zweiten Betriebsmodus ist die erste Lichtquelle ausgeschaltet, und die zweite Lichtquelle ist eingeschaltet. Im dritten Betriebsmodus ist die erste Lichtquelle eingeschaltet, und die zweite Lichtquelle ist ausgeschaltet. Im ersten Betriebsmodus erfolgt vorzugsweise eine Dunkelstrommessung. Im zweiten Betriebsmodus erfolgt der vorgenannte Abgleich. Im dritten Betriebsmodus erfolgt insbesondere der normale Betrieb (Torsionsmessung) der Sensoranordnung.

Es ist vorteilhaft, wenn die Sensoranordnung eine an einer ersten Position angeordnete Sendeeinheit und mehrere entlang einer Biegelinie des Rotorblatts an einer zweiten bis n-ten Position (z. B. n = 4) angeordnete Sende-Empfangs-Einheiten aufweist, wenn die Sendeeinheit die erste Lichtquelle, den ersten sendeseitigen Polarisator und die zweite Lichtquelle umfasst, wenn eine erste Sende-Empfangs-Einheit der Sende-Empfangs-Einheiten das erste und zweite Detektorelement und den ersten und zweiten empfangsseitigen Polarisator umfasst, wenn die erste Sende-Empfangs-Einheit eine dritte Lichtquelle zum Erzeugen von Licht und einen in Lichtausbreitungsrichtung nach der dritten Lichtquelle angeordneten zweiten sendeseitigen Polarisator umfasst, wenn die dritte Lichtquelle und der zweite sendeseitige Polarisator dazu ausgebildet sind, linear polarisiertes Licht als drittes Sendelicht zu erzeugen und wenn die erste Sende-Empfangs-Einheit eine vierte Lichtquelle zum Erzeugen von unpolarisiertem Licht als viertes Sendelicht umfasst. Durch die Sendeeinheit und die Sende-Empfangs-Einheiten kann eine Messkette (Metrologie-Kette) zur Torsionsmessung in einem gebogenen Rotorblatt gebildet werden. Dies ist insbesondere bei einem Rotorblatt mit einer ab Werk (werkseitig) vorbestimmten Biegung (sogenanntes Prebend) von Vorteil.

Ferner ist es vorteilhaft, wenn die erste Lichtquelle und der erste sendeseitige Polarisator dazu ausgebildet sind, das linear polarisierte Licht als erstes Sendelicht derart zu erzeugen, dass eine Polarisationsrichtung des linear polarisierten Lichts parallel oder senkrecht zu einer zweiten Richtung ist und wenn die zweite Richtung durch eine vorbestimmte Biegung des Rotorblatts definiert ist. Dadurch können Messfehler durch die Projektion des Polarisationszustandes (bzw. der Polarisationsrichtung) auf den beispielsweise unter Nulllast durch die vorbestimmte Biegung des Rotorblatts verkippten ersten und zweiten empfangsseitigen Polarisator reduziert oder minimiert werden.

Vorzugsweise sind die erste und zweite Lichtquelle relativ zueinander derart angeordnet, dass sie im Wesentlichen in einen gleichen Raumwinkel abstrahlen.

Beispielsweise sind die erste und/oder zweite Lichtquelle jeweils eine inkohärente Lichtquelle, vorzugsweise eine LED, oder ein Laser.

Die erste Lichtquelle kann auch als Messlichtquelle bezeichnet werden, und die zweite Lichtquelle kann auch als Abgleichlichtquelle bezeichnet werden.

Durch die Erfindung wird mit einer einfach und robust aufgebauten Sensoranordnung eine präzise Detektion mindestens einer in Bezug auf eine erste und zweite Position definierten ersten Torsion des Rotorblatts ermöglicht. Die Detektion erfolgt im Wesentlichen unabhängig von Änderungen der Umgebungsbedingungen (z. B. Temperatur- und/oder Feuchtigkeitsschwankungen) bzw. unabhängig vom Wetter (z. B. leichter Nebel). Dadurch wird eine hohe Genauigkeit der Detektion des Rotorblatts, insbesondere während eines Langzeitbetriebs der Sensoranordnung, erreicht. Die Erfindung ermöglicht zudem die Detektion der ersten Torsion und/oder weiterer Torsionen mit einer relativ hohen Bandbreite (z. B. in der Größenordnung mehrere kHz). Dadurch können insbesondere Flatterbewegungen des Rotorblatts zuverlässig erkannt bzw. erfasst werden. Darüber hinaus ist die Detektion der ersten Torsion und/oder weiterer Torsionen unter verschiedenen Lastbedingungen (z. B. jeweils unterschiedliche Biegungen des Rotorblatts in positiver bzw. negativer Z-Richtung) möglich. Hierzu kann insbesondere eine im Rotorblatt angeordnete Metrologie-Kette eingesetzt werden.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von Ausführungsbeispielen der Erfindung in Verbindung mit den Figuren erläutert.

### KURZE BESCHREIBUNG DER ZEICHNUNGEN

Es zeigen
- Figur 1a: eine perspektivische Ansicht eines beispielhaften Rotorblatts zur Veranschaulichung einer ersten und zweiten Torsion des Rotorblatts;
- Figur 1b: ein Blockdiagramm einer beispielhaften Sensoranordnung gemäß einem ersten Ausführungsbeispiel;
- Figur 2: ein Blockdiagramm einer beispielhaften Sensoranordnung gemäß einem zweiten Ausführungsbeispiel;
- Figur 3: ein Blockdiagramm einer beispielhaften Sensoranordnung gemäß einem dritten Ausführungsbeispiel;
- Figur 4: ein Blockdiagramm einer beispielhaften Sensoranordnung gemäß einem vierten Ausführungsbeispiel;
- Figur 5a: eine perspektivische Ansicht eines beispielhaften Rotorblatts mit einer Sendeeinheit und mehreren Sende-Empfangs-Einheiten zur Bildung einer Metrologie-Kette;
- Figur 5b: ein Blockdiagramm der Sendeeinheit und der Sende-Empfangs-Einheiten nach Figur 5a;
- Figur 5c: ein Blockdiagramm der Sendeeinheit nach Figur 5b;
- Figur 5d: ein Blockdiagramm einer ersten Sende-Empfangs-Einheit der Sende-Empfangs-Einheiten nach Figur 5b;
- Figur 6: eine Querschnittsansicht des Rotorblatts nach Figur 5a im Bereich einer erster Sichtlinie mit mehreren in X-Richtung nebeneinander angeordneten Empfangseinheiten;
- Figur 7: ein Blockdiagramm einer beispielhaften Sensoranordnung gemäß einem fünften Ausführungsbeispiel;
- Figur 8: ein Blockdiagramm einer beispielhaften Sensoranordnung gemäß einem sechsten Ausführungsbeispiel;
- Figur 9: ein Blockdiagramm einer beispielhaften Sensoranordnung gemäß einem siebten Ausführungsbeispiel;
- Figur 10: ein Blockdiagramm einer beispielhaften Sensoranordnung gemäß einem achten Ausführungsbeispiel;
- Figur 11: eine schematische Darstellung einer Einheit zum Erfassen eines Winkels, die in der Sensoranordnung nach Figur 9 bzw. 10 eingesetzt werden kann;
- Figur 12: ein Blockdiagramm einer beispielhaften Sensoranordnung gemäß einem neunten Ausführungsbeispiel;
- Figur 13a: eine schematische Darstellung eines Strahlengangs einer an einer beispielhaften (alternativen) ersten oder zweiten Position angeordneten zweiten Lichtquelle der Sensoranordnung nach Figur 8 in einer Draufsicht; und
- Figur 13b: eine schematische Darstellung des Strahlengangs nach Figur 13a in einer Seitenansicht.

### BESCHREIBUNG DER AUSFÜHRUNGSFORMEN

Gleiche Elemente oder funktionell gleiche Elemente sind in den Figuren mit gleichen Bezugszeichen versehen.

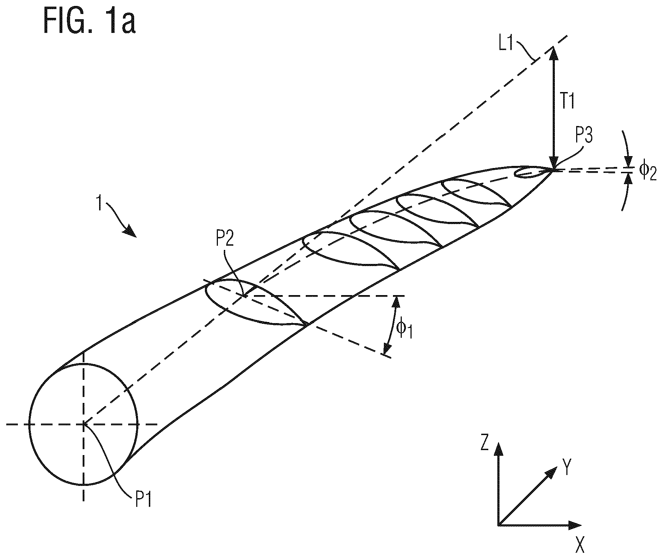

Figur 1a zeigt eine perspektivische Ansicht eines beispielhaften Rotorblatts 1 zur Veranschaulichung einer ersten und zweiten Torsion ϕ₁, ϕ₂ des Rotorblatts 1. Das Rotorblatt 1 hat eine Längsachse L1. Die erste Torsion ϕ₁ ist in Bezug auf eine erste Position P1 und eine zweite Position P2 definiert. Die zweite Torsion ϕ₂ ist in Bezug auf die zweite Position P2 und eine dritte Position P3 definiert. Die erste bis dritte Position P1 bis P3 sind entlang einer Längserstreckung des Rotorblatts 1 jeweils in einem Abstand voneinander angeordnet.

Wie in Figur 1a gezeigt, hat das Rotorblatt 1 eine vorbestimmte Biegung T1 (Prebend). Die vorbestimmte Biegung T1 ist in Bezug auf die Längsachse L1 definiert. Beispielsweise erstreckt sich die vorbestimmte Biegung T1 in negativer Z-Richtung (vgl. Figur 1a).

Eine erste Richtung (X-Richtung) bzw. eine Koordinatenachse X ist senkrecht zur Längsachse L1. Eine zweite Richtung (Z-Richtung) bzw. eine Koordinatenachse Z ist durch die vorbestimmte Biegung T1 des Rotorblatts 1 definiert. Eine dritte Richtung (Y-Richtung) bzw. eine Koordinatenachse Y ist parallel zur Längsachse L1. Durch die erste bis dritte Richtung (Koordinatenachse X, Z, Y) wird das in Figur 1a gezeigte Koordinatensystem gebildet.

Die erste Position P1 entspricht beispielsweise einer Position an oder nahe einer Blattwurzel des Rotorblatts 1. Die dritte Position P3 entspricht beispielsweise einer Position an oder nahe einer Blattspitze des Rotorblatts 1. Die zweite Position P2 entspricht beispielsweise einer Position innerhalb des Rotorblatts 1. Beispielsweise ist die zweite Position P2 zwischen der ersten und dritten Position P1, P3 angeordnet.

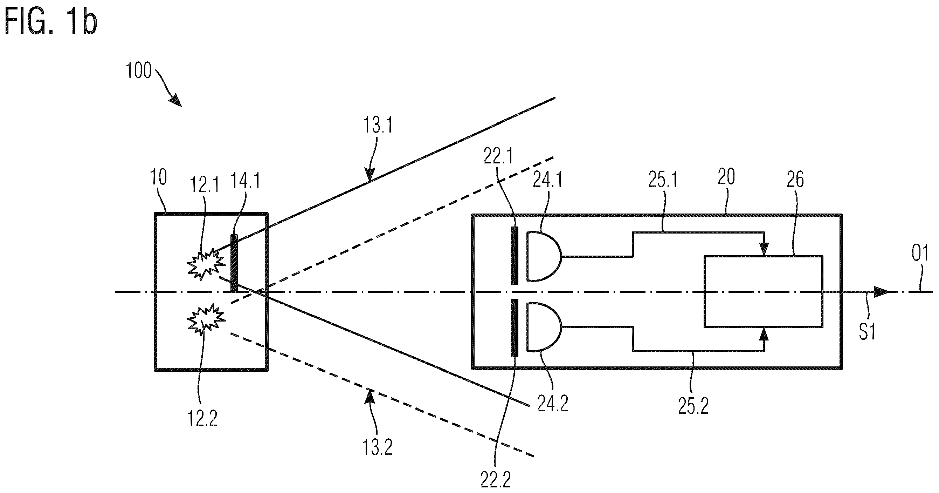

Ein erstes bis viertes Ausführungsbeispiel werden nachfolgend anhand der Figuren 1b und 2 bis 4 erläutert. Die Sensoranordnung gemäß dem ersten bis vierten Ausführungsbeispiel dient zum jeweiligen Erfassen der ersten Torsion ϕ₁ (vgl. Figur 1a).

Die Sensoranordnung gemäß dem ersten Ausführungsbeispiel umfasst eine erste Lichtquelle 12.1 zum Erzeugen von Licht und einen in Lichtausbreitungsrichtung nach der ersten Lichtquelle 12.1 angeordneten ersten sendeseitigen Polarisator 14.1 zum Erzeugen von linear polarisiertem Licht als erstes Sendelicht 13.1. Das erste Sendelicht 13.1 hat eine Abstrahlcharakteristik entsprechend einem vorbestimmten Raumwinkel (vgl. Figur 1b).

Die Sensoranordnung nach Figur 1b umfasst ein erstes Detektorelement 24.1 und ein zweites Detektorelement 24.2. Das erste Detektorelement 24.1 und das zweite Detektorelement 24.2 sind derart angeordnet und ausgebildet, dass sie zumindest das erste Sendelicht 13.1 empfangen. Wie in Figur 1b gezeigt, sind das erste und zweite Detektorelement 24.1, 24.2 in einer Ebene senkrecht zu einer optischen Achse O1 (d. h. X-Z-Ebene) nebeneinander angeordnet. Vorzugsweise ist die optische Achse O1 parallel zur Längsachse L1.

Die Sensoranordnung nach Figur 1b umfasst einen in Lichtausbreitungsrichtung vor dem ersten Detektorelement 24.1 angeordneten ersten empfangsseitigen Polarisator 22.1 und einen in Lichtausbreitungsrichtung vor dem zweiten Detektorelement 24.2 angeordneten zweiten empfangsseitigen Polarisator 22.2. Eine Orientierung einer Polarisationsebene des ersten empfangsseitigen Polarisators 22.1 und eine Orientierung einer Polarisationsebene des zweiten empfangsseitigen Polarisators 22.2 sind voneinander verschieden.

Der erste sendeseitige Polarisator 14.1 und der erste und zweite empfangsseitige Polarisator 22.1, 22.2 können auch als Linearpolarisatoren bezeichnet werden. Vorzugsweise sind die Orientierung der Polarisationsebene des ersten empfangsseitigen Polarisators 22.1 und die Orientierung der Polarisationsebene des zweiten empfangsseitigen Polarisators 22.2 senkrecht zueinander (d. h. Winkel von 90°).

Die Sensoranordnung nach Figur 1b weist eine zweite Lichtquelle 12.2 zum Erzeugen von unpolarisiertem Licht als zweites Sendelicht 13.2 auf. Das zweite Sendelicht 13.2 hat eine Abstrahlcharakteristik entsprechend einem vorbestimmten Raumwinkel (vgl. wiederum Figur 1b). Wie in Figur 1b gezeigt, sind die erste und zweite Lichtquelle 12.1, 12.2 in einer Richtung senkrecht zur optischen Achse O1 (d. h. in X-Richtung) nebeneinander angeordnet.

Die erste und zweite Lichtquelle 12.1, 12.2 sind relativ zueinander derart angeordnet, dass sie im Wesentlichen in einen gleichen Raumwinkel abstrahlen. Mit anderen Worten, die Raumwinkel der Abstrahlcharakteristiken der ersten und zweiten Lichtquelle 12.1, 12.2 sind im Wesentlichen deckungsgleich.

Mit Bezug auf Figur 1b haben die erste und zweite Lichtquelle 12.1, 12.2 die optische Achse O1 als gemeinsame (im Wesentlichen gleiche) optische Achse.

Wie in Figur 1b gezeigt, sind das erste Detektorelement 24.1 und das zweite Detektorelement 24.2 derart angeordnet und ausgebildet, dass sie das zweite Sendelicht 13.2 empfangen. Ferner ist in Figur 1b gezeigt, dass zwischen der zweiten Lichtquelle 12.2 und einem durch das erste und zweite Detektorelement 24.1, 24.2 gebildeten Paar kein sendeseitiger Polarisator angeordnet ist. Mit anderen Worten, der erste sendeseitige Polarisator 14.1 ist nur zwischen der ersten Lichtquelle 12.1 und dem durch das erste und zweite Detektorelement 24.1, 24.2 gebildeten Paar angeordnet. Das durch das erste und zweite Detektorelement 24.1, 24.2 gebildete Paar dient somit einerseits zum Empfangen des ersten Sendelichts 13.1 in Form von linear polarisiertem Licht und andererseits zum Empfangen des zweiten Sendelichts 13.2 in Form von unpolarisiertem Licht.

Mit Bezug auf Figur 1b weist die Sensoranordnung eine Auswerteeinheit 26 zum Erzeugen eines ein Maß der ersten Torsion ϕ₁ darstellenden Ausgangssignals S1 in Abhängigkeit eines von dem ersten Detektorelement 24.1 erzeugten ersten Messsignals 25.1 und in Abhängigkeit eines von dem zweiten Detektorelement 24.2 erzeugten zweiten Messsignals 25.2 auf.

Durch die Auswerteeinheit 26 erfolgt beispielsweise die Bildung eines Quotienten aus der Differenz und der Summe des ersten und zweiten Messsignals 25.1, 25.2.

Beim ersten Ausführungsbeispiel wird durch die erste und zweite Lichtquelle 12.1, 12.2 und den ersten sendeseitigen Polarisator 14.1 eine Sendeeinheit 10 gebildet. Ferner wird beim ersten Ausführungsbeispiel durch das erste und zweite Detektorelement 24.1, 24.2, den ersten und zweiten empfangsseitigen Polarisator 22.1, 22.2 und die Auswerteeinheit 26 eine Empfangseinheit 20 gebildet. Durch die Sendeeinheit 10 und die Empfangseinheit 20 wird wiederum das in Figur 1b gezeigte System 100 gebildet.

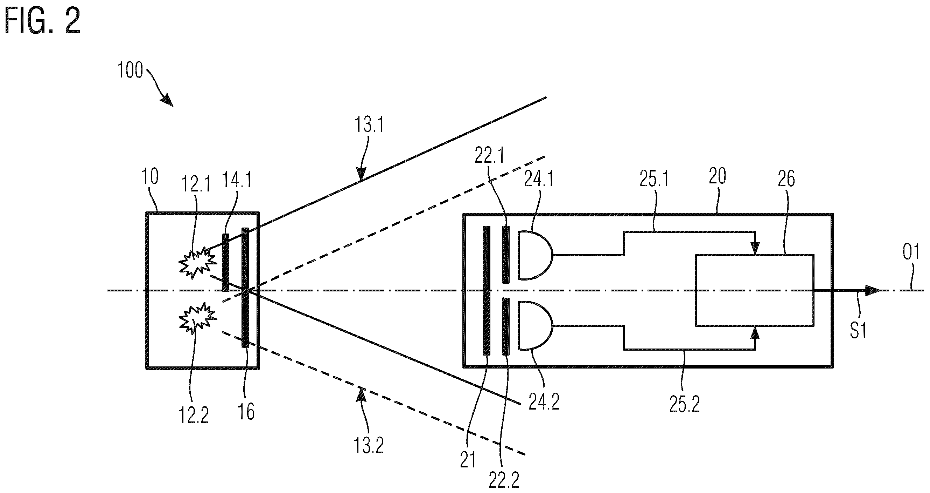

Die Sensoranordnung gemäß dem zweiten Ausführungsbeispiel unterscheidet sich von der Sensoranordnung gemäß dem ersten Ausführungsbeispiel dadurch, dass die Sensoranordnung einen in Lichtausbreitungsrichtung zumindest nach der ersten Lichtquelle 12.1 angeordneten sendeseitigen Farbfilter 16 und einen in Lichtausbreitungsrichtung vor dem ersten und zweiten Detektorelement 24.1, 24.2 angeordneten empfangsseitigen Farbfilter 21 aufweist. Eine Durchlass-Wellenlänge des sendeseitigen Farbfilters 16 und eine Durchlass-Wellenlänge des empfangsseitigen Farbfilters 21 sind gleich. Insbesondere ist der sendeseitige Farbfilter 16 der ersten und zweiten Lichtquelle 12.1, 12.2 gemeinsam zugeordnet (vgl. Figur 2).

Beim zweiten Ausführungsbeispiel wird durch die Elemente 12.1, 12.2, 14.1 und 16 eine Sendeeinheit 10 gebildet. Ferner wird beim zweiten Ausführungsbeispiel durch die Elemente 24.1, 24.2, 22.1, 22.2, 21 und 26 eine Empfangseinheit 20 gebildet. Durch die Sendeeinheit 10 und die Empfangseinheit 20 wird wiederum das in Figur 2 gezeigte System 100 gebildet.

Durch den sendeseitigen Farbfilter 16 und den empfangsseitigen Farbfilter 21 werden die Sendeeinheit 10 und die Empfangseinheit 20 des Systems 100 nach Figur 2 aufeinander abgestimmt. D. h., die Empfangseinheit 20 ist nur empfindlich auf das erste und zweite Sendelicht 13.1, 13.2 mit einer durch die Sendeeinheit 10 (bzw. den sendeseitigen Farbfilter 16) vorbestimmten Wellenlänge. Umgekehrt ist die Empfangseinheit 20 nicht empfindlich auf Sendelicht einer anderen Wellenlänge, das vom ersten und zweiten Sendelicht 13.1, 13.2 mit der vorbestimmten Wellenlänge verschieden ist.

Alternativ zum zweiten Ausführungsbeispiel kann die Sensoranordnung nach Figur 1b dazu ausgebildet sein, die erste und/oder zweite Lichtquelle 12.1, 12.2 jeweils mit einer vorbestimmten Frequenz zu modulieren, um das erste bzw. zweite Sendelicht 13.1, 13.2 als moduliertes Sendelicht zu erzeugen, um ein von dem ersten Detektorelement 24.1 erzeugtes erstes moduliertes Messsignal 25.1 und ein von dem zweiten Detektorelement 24.2 erzeugtes zweites moduliertes Messsignal 25.2 zu erhalten. In diesem Fall ist die Auswerteeinheit 26 dazu ausgebildet, das Ausgangssignal S1 in Abhängigkeit des ersten und zweiten modulierten Messsignals 25.1, 25.2 zu erzeugen.

Durch die vorgenannte Modulation wird erreicht, dass die Sendeeinheit 10 und die Empfangseinheit 20 des Systems 100 nach Figur 1b aufeinander abgestimmt werden. D. h., die Empfangseinheit 20 ist nur empfindlich auf das erste und zweite Sendelicht 13.1, 13.2 mit einer durch die Sendeeinheit 10 (bzw. die Modulation der ersten und/oder zweiten Lichtquelle 12.1, 12.2) vorbestimmten Frequenz. Umgekehrt ist die Empfangseinheit 20 nicht empfindlich auf Sendelicht einer anderen Frequenz, das vom ersten und zweiten Sendelicht 13.1, 13.2 mit der vorbestimmten Frequenz verschieden ist.

Die Sensoranordnung gemäß dem dritten Ausführungsbeispiel unterscheidet sich von der Sensoranordnung gemäß dem zweiten Ausführungsbeispiel durch die folgenden strukturellen Merkmale: Die Sensoranordnung weist einen mit der ersten Lichtquelle 12.1 gekoppelten ersten sendeseitigen Lichtwellenleiter 18.11 und einen mit der zweiten Lichtquelle 12.2 gekoppelten zweiten sendeseitigen Lichtwellenleiter 18.21 auf. Die Sensoranordnung weist ein mit dem ersten sendeseitigen Lichtwellenleiter 18.11 gekoppeltes erstes sendeseitiges Linsenelement 18.12 und ein mit dem zweiten sendeseitigen Lichtwellenleiter 18.21 gekoppeltes zweites sendeseitiges Linsenelement 18.22 auf. Die Sensoranordnung weist einen mit dem ersten Detektorelement 24.1 gekoppelten ersten empfangsseitigen Lichtwellenleiter 28.11 und einen mit dem zweiten Detektorelement 24.2 gekoppelten zweiten empfangsseitigen Lichtwellenleiter 28.21 auf. Die Sensoranordnung weist ein mit dem ersten empfangsseitigen Lichtwellenleiter 28.11 gekoppeltes erstes empfangsseitiges Linsenelement 28.12 und ein mit dem zweiten empfangsseitigen Lichtwellenleiter 28.21 gekoppeltes zweites empfangsseitiges Linsenelement 28.22 auf. Das erste und zweite sendeseitige Linsenelement 18.12, 18.22 und das erste und zweite empfangsseitige Linsenelement 28.12, 28.22 sind jeweils innerhalb eines längserstreckten Teils des Rotorblatts 1 angeordnet. Ferner sind die erste und zweite Lichtquelle 12.1, 12.2 und das erste und zweite Detektorelement 24.1, 24.2 jeweils außerhalb des längserstreckten Teils des Rotorblatts 1 (z. B. in bzw. nahe der Blattwurzel oder außerhalb des gesamten Rotorblatts 1) angeordnet.

Dadurch wird eine Entkopplung (bzw. Trennung) der (rein) optischen Elemente (insbesondere die Elemente 18.12, 18.22, 28.12, 28.22) von den eine aktive Elektronik aufweisenden Elementen (insbesondere die Elemente 12.1, 12.2, 24.1, 24.2) erreicht. Dies ist dahingehend vorteilhaft, dass eine Schädigung oder Störung der die aktive Elektronik aufweisenden Elemente, beispielsweise durch Blitzschlag in der Windkraftanlage, vermieden werden kann.

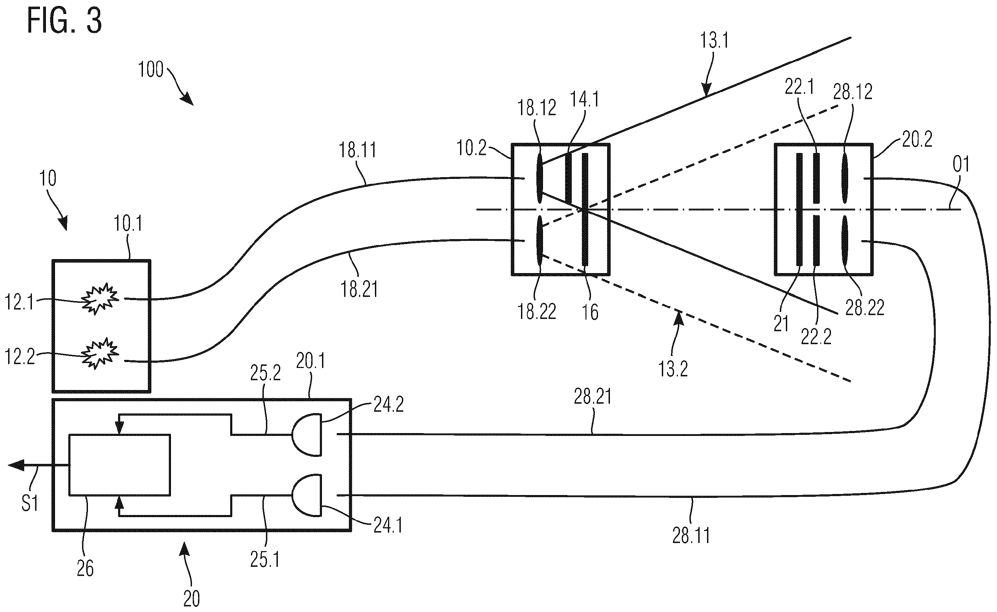

Durch die Elemente 12.1, 12.2 wird ein erster Teil 10.1 einer Sendeeinheit 10 gebildet. Durch die Elemente 18.12, 18.22, 14.1, 16 wird ein zweiter Teil 10.2 der Sendeeinheit 10 gebildet. Durch die Elemente 24.1, 24.2, 26 wird ein erster Teil 20.1 einer Empfangseinheit 20 gebildet. Durch die Elemente 28.12, 28.22, 22.1, 22.2, 21 wird ein zweiter Teil 20.2 der Empfangseinheit 20 gebildet. Durch die Sendeeinheit 10 und die Empfangseinheit 20 wird wiederum das in Figur 3 gezeigte System 100 gebildet.

Der erste und zweite sendeseitige Lichtwellenleiter 18.11, 18.21 sind jeweils Multimode-Fasern oder Single-Mode-Fasern, und der erste und zweite empfangsseitige Lichtwellenleiter 28.11, 28.21 sind jeweils Multimode-Fasern. Bei den Multimode-Fasern handelt es sich insbesondere um Fasern mit großem Kern und angepasster numerischer Apertur. Die Sensoranordnung nach Figur 3 ist insbesondere eine passive Messkonfiguration.

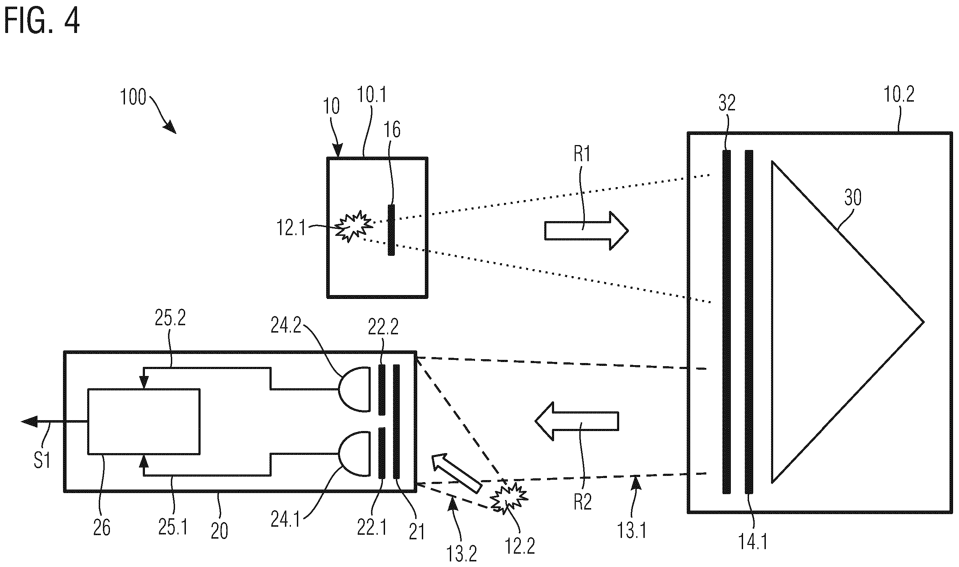

Die Sensoranordnung gemäß dem vierten Ausführungsbeispiel unterscheidet sich von der Sensoranordnung gemäß dem zweiten Ausführungsbeispiel durch die folgenden strukturellen Merkmale: Die Sensoranordnung weist einen in Lichtausbreitungsrichtung nach der ersten Lichtquelle 12.1 und mit dem ersten sendeseitigen Polarisator 14.1 fest verbundenen Retroreflektor 30 auf. Die erste Lichtquelle 12.1, das erste Detektorelement 24.1 und das zweite Detektorelement 24.2 sind in der ersten Richtung (X-Richtung) senkrecht zur Längsachse L1 des Rotorblatts 1 nebeneinander angeordnet. Die zweite Lichtquelle 12.2 ist zwischen einem durch das erste und zweite Detektorelement 24.1, 24.2 gebildeten Paar und dem Retroreflektor 30 angeordnet (vgl. Figur 4).

In Figur 4 sind zwei Pfeile R1, R2 dargestellt. Der Pfeil R1 gibt die Lichtausbreitungsrichtung von der ersten Lichtquelle 12.1 zum Retroreflektor 30 an. Der Pfeil R2 gibt die Lichtausbreitungsrichtung vom Retroreflektor 30 zum durch das erste und zweite Detektorelement 24.1, 24.2 gebildeten Paar an. Wie in Figur 4 gezeigt, ist die zweite Lichtquelle 12.2 in Lichtausbreitungsrichtung (Pfeil R2) nach dem Retroreflektor 30 angeordnet. Ferner ist in Figur 4 gezeigt, dass das zweite Sendelicht 13.2 der zweiten Lichtquelle 12.2 (zusammen mit dem ersten Sendelicht 13.1) auf das durch das erste und zweite Detektorelement 24.1, 24.2 gebildete Paar trifft.

Mit Bezug auf Figur 4 ist zusätzlich zu dem sendeseitigen Farbfilter 16 und dem empfangsseitigen Farbfilter 21 ein weiterer Farbfilter 32 vorgesehen. Der weitere Farbfilter 32 ist einerseits zwischen der ersten Lichtquelle 12.1 und dem Retroreflektor 30 und andererseits zwischen dem durch das erste und zweite Detektorelement 24.1, 24.2 gebildeten Paar und dem Retroreflektor 30 angeordnet. Der Retroreflektor 30 dient zum Umlenken der Lichtausbreitungsrichtung, wie es durch die Pfeile R1, R2 angedeutet ist.

Durch die Elemente 12.1, 16 wird ein erster Teil 10.1 einer Sendeeinheit 10 gebildet. Durch die Elemente 14.1, 30, 32 wird ein zweiter Teil 10.2 der Sendeeinheit 10 gebildet. Durch die Elemente 24.1, 24.2, 22.1, 22.2, 21, 26 wird eine Empfangseinheit 20 gebildet. Durch die Sendeeinheit 10 und die Empfangseinheit 20 wird wiederum das in Figur 4 gezeigte System 100 gebildet.

Beim vierten Ausführungsbeispiel wird ein besonders kompakter Aufbau der Sensoranordnung erreicht. Insbesondere kann der Retroreflektor 30 in der Blattspitze des Rotorblatts 1 angeordnet sein.

Bei einer Torsion des Rotorblatts 1 drehen sich der Retroreflektor 30 und der erste sendeseitige Polarisator 14.1 gemeinsam, wodurch sich auch die Polarisationsrichtung des reflektierten Lichts (d. h. das erste Sendelicht 13.1) dreht. Diese Polarisationsdrehung wird mit der Empfangseinheit 20 detektiert.

Es ist denkbar, mehrere Retroreflektoren im Sichtfeld des ersten Teils 10.1 der Sendeeinheit 10 und mehrere den Retroreflektoren jeweils zugeordnete Empfangseinheiten anzuordnen. Dabei können mehrere den Retroreflektoren jeweils zugeordnete sendeseitige Farbfilter und mehrere den Empfangseinheiten jeweils zugeordnete empfangsseitige Farbfilter vorgesehen sein. Diese sendeseitigen Farbfilter und jene empfangsseitigen Farbfilter sind insbesondere aufeinander abgestimmt. Mit anderen Worten, für jeden farblich kodierten Retroreflektor gibt es nun eine, in derselben Farbe kodierte, Empfangseinheit. Um Linearitätskonstanten von Detektorelementen der jeweiligen Empfangseinheit bestimmen zu können (vgl. die spätere Erläuterung zum beispielhaften Betrieb der Sensoranordnung), wird in diesem Fall die zweite Lichtquelle 12.2 an oder in der Nähe der jeweiligen Empfangseinheit so angebracht, dass die zweite Lichtquelle 12.2 das erste und zweite Detektorelement 24.1, 24.2 mit einer gleichen Lichtleistung beaufschlagt.

Im Folgenden wird der Betrieb der Sensoranordnung erläutert. Die Sensoranordnung hat einen ersten bis dritten Betriebsmodus. Die Sensoranordnung ist dazu ausgebildet, zwischen dem ersten bis dritten Betriebsmodus zyklisch umzuschalten.

Die Betriebsmodi sind folgendermaßen definiert (vgl. Figur 1b): Im ersten Betriebsmodus sind die erste und zweite Lichtquelle 12.1, 12.2 ausgeschaltet. Im zweiten Betriebsmodus ist die erste Lichtquelle 12.1 ausgeschaltet, und die zweite Lichtquelle 12.2 ist eingeschaltet. Im dritten Betriebsmodus ist die erste Lichtquelle 12.1 eingeschaltet, und die zweite Lichtquelle 12.2 ist ausgeschaltet. Der dritte Betriebsmodus kann auch als Messmodus bezeichnet werden. Der zweite Betriebsmodus kann auch als Abgleichmodus bezeichnet werden. Im ersten Betriebsmodus erfolgt insbesondere eine Messung von Dunkelströmen.

Durch das zuvor erläuterte zyklische Umschalten kann, insbesondere während des Langzeitbetriebs, ein Abgleich der Sensoranordnung (bzw. des ersten und zweiten Detektorelements 24.1, 24.2) wiederholt (fortlaufend) durchgeführt werden. Dadurch wird eine hohe Genauigkeit der Detektion des Rotorblatts 1, insbesondere bei im Langzeitbetrieb auftretenden Änderungen der Umgebungsbedingungen, erreicht. Es erfolgt quasi ein ständiger Abgleich der Sensoranordnung (Online-Signalabgleich).

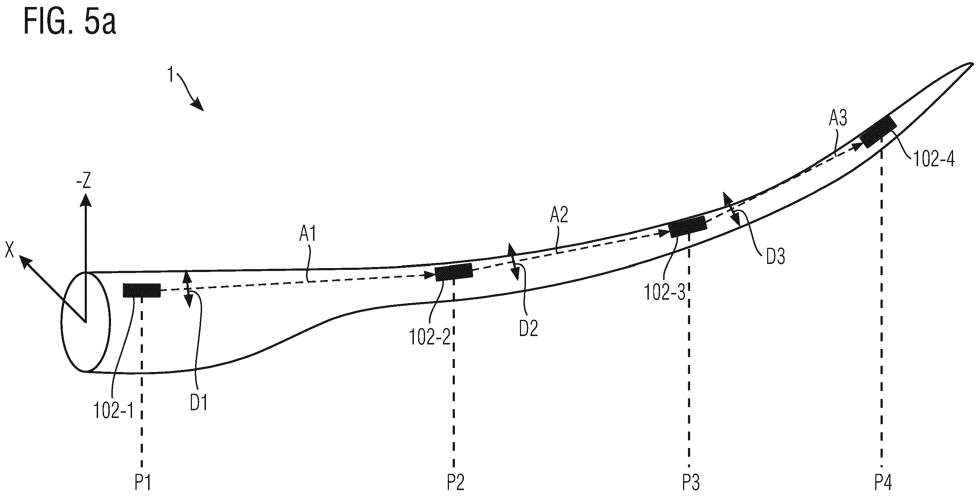

In den Figuren 5a bis 5d sind Einzelheiten einer Metrologie-Kette dargestellt. Wie in Figur 5a zu erkennen, ist die Metrologie-Kette in einem gebogenen Rotorblatt 1 vorgesehen.

In Figur 5a sind vier verschiedene Positionen P1 bis P4 (d. h. n = 4) gezeigt. Die erste Position P1 in Figur 5a entspricht insbesondere der ersten Position P1 in Figur 1a. Die zweite bis vierte Position P2 bis P4 in Figur 5a entsprechen mehreren entlang einer Längserstreckung des Rotorblatts 1 angeordneten Positionen. Die erste und zweite Position P1, P2 sind in einem ersten Abstand (erste Sichtlinie A1) voneinander angeordnet. Die zweite und dritte Position P2, P3 sind in einem zweiten Abstand (zweite Sichtlinie A2) voneinander angeordnet. Die dritte und vierte Position P3, P4 sind in einem dritten Abstand (dritte Sichtlinie A3) voneinander angeordnet. Durch die erste bis dritte Sichtlinie A1 bis A3 wird eine Kurve gebildet. Diese Kurve entspricht im Wesentlichen einer Biegelinie des Rotorblatts 1. Wie in Figur 5a beispielhaft dargestellt, ist das Rotorblatt 1 in negativer Z-Richtung gebogen.

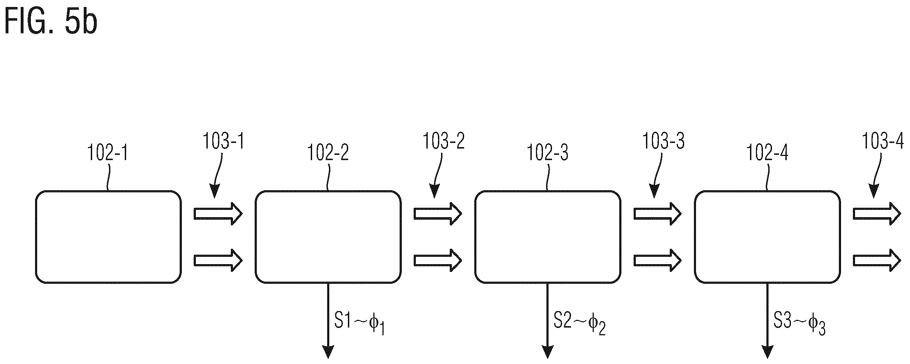

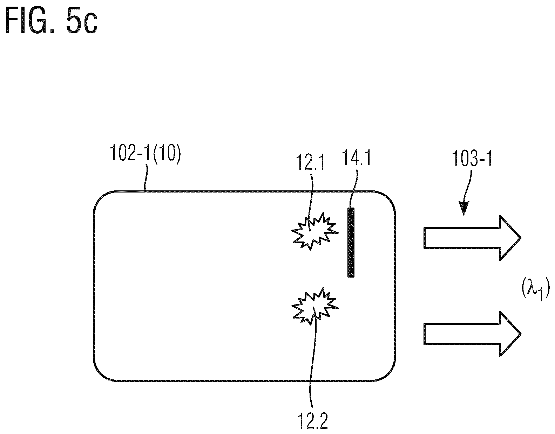

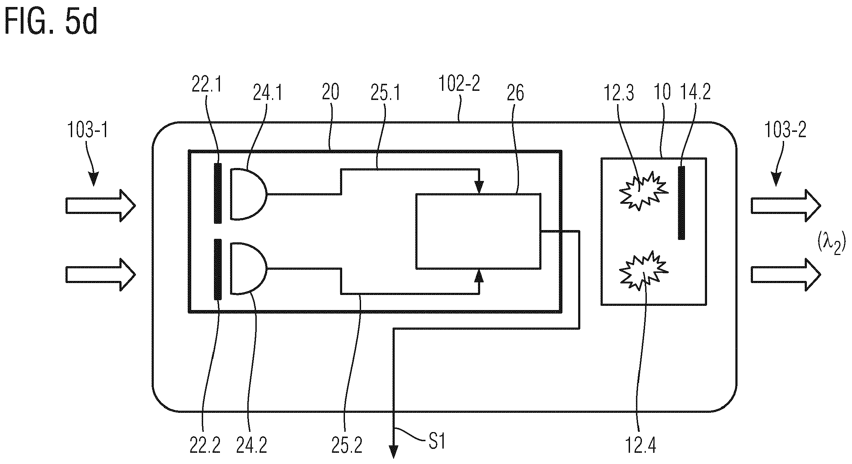

Beim Ausführungsbeispiel gemäß Figur 5a weist die Sensoranordnung eine an der ersten Position P1 angeordnete Sendeeinheit 102-1 und mehrere entlang der Biegelinie des Rotorblatts 1 an der zweiten bis vierten Position P2 bis P4 angeordnete Sende-Empfangs-Einheiten 102-2, 102-3, 102-4 auf. Die durch die Sendeeinheit 102-1 und die Sende-Empfangs-Einheiten 102-2 bis 102-4 gebildete Metrologie-Kette ist in Figur 5b schematisch dargestellt. Mit Bezug auf Figur 5c umfasst die Sendeeinheit 102-1 die erste Lichtquelle 12.1, den ersten sendeseitigen Polarisator 14.1 und die zweite Lichtquelle 12.2. Mit Bezug auf Figur 5d umfasst eine erste Sende-Empfangs-Einheit 102-2 der Sende-Empfangs-Einheiten 102-2 bis 102-4 das erste und zweite Detektorelement 24.1, 24.2 und den ersten und zweiten empfangsseitigen Polarisator 22.1, 22.2. Wie in Figur 5d zu erkennen, umfasst die erste Sende-Empfangs-Einheit 102-2 zudem eine dritte Lichtquelle 12.3 zum Erzeugen von Licht und einen in Lichtausbreitungsrichtung nach der dritten Lichtquelle 12.3 angeordneten zweiten sendeseitigen Polarisator 14.2. Die dritte Lichtquelle 12.3 und der zweite sendeseitige Polarisator 14.2 sind dazu ausgebildet, linear polarisiertes Licht als drittes Sendelicht zu erzeugen. Ferner ist in Figur 5d zu erkennen, dass die erste Sende-Empfangs-Einheit 102-2 eine vierte Lichtquelle 12.4 zum Erzeugen von unpolarisiertem Licht als viertes Sendelicht umfasst.

Die Sendeeinheit 102-1 in Figur 5c entspricht insbesondere der Sendeeinheit 10 in Figur 1b. Die Empfangseinheit 20 der ersten Sende-Empfangs-Einheit 102-2 in Figur 5d entspricht insbesondere der Empfangseinheit 20 in Figur 1b. Durch die Elemente 12.3, 12.4 und 14.2 in Figur 5d wird eine weitere Sendeeinheit 10 gebildet. Die Empfangseinheit 20 in Figur 5d ist Teil der ersten Sende-Empfangs-Einheit 102-2. Ferner ist die weitere Sendeeinheit 10 in Figur 5d Teil der ersten Sende-Empfangs-Einheit 102-2.

Eine zweite und dritte Sende-Empfangs-Einheit 102-3, 102-4 der Sende-Empfangs-Einheiten 102-2 bis 102-4 sind jeweils analog zur ersten Sende-Empfangs-Einheit 102-2 ausgebildet. Die erste Sende-Empfangs-Einheit 102-2 dient zum Erzeugen des das Maß der ersten Torsion ϕ₁ darstellenden Ausgangssignals S1 (vgl. Figur 5b). Die zweite und dritte Sende-Empfangs-Einheit 102-3, 102-4 dienen jeweils zum Erzeugen eines ein Maß einer zweiten bzw. dritten Torsion ϕ₂, ϕ₃ darstellenden Ausgangssignals S2, S3 (vgl. Figur 5b).

Durch die zuvor erläuterte Metrologie-Kette wird eine Torsionsmessung über mehrere entlang der Biegelinie des Rotorblatts 1 angeordnete Positionen (z. B. Positionen P1 bis P4) erreicht.

Bei dieser Torsionsmessung ist es vorteilhaft, wenn die erste Lichtquelle 12.1 und der erste sendeseitige Polarisator 14.1 dazu ausgebildet sind, das linear polarisierte Licht als erstes Sendelicht 13.1 derart zu erzeugen, dass eine Polarisationsrichtung des linear polarisierten Lichts parallel oder senkrecht zur zweiten Richtung Z ist. Dies ist in Figur 5a für die erste Sichtlinie A1 durch den Doppelpfeil D1 dargestellt. Analoges gilt für die zweite und dritte Sichtlinie A2, A3 in Figur 5a (Doppelpfeile D2, D3).

Durch das erste und zweite Sendelicht 13.1, 13.2 (vgl. Figur 1b) wird ein erstes Gesamt-Sendelicht 103-1 gebildet (vgl. Figur 5c). Durch das dritte und vierte Sendelicht wird ein zweites Gesamt-Sendelicht 103-2 gebildet (vgl. Figur 5d). Mit Bezug auf Figur 5b können die Sendeeinheit 102-1 und die erste bis dritte Sende-Empfangs-Einheit 102-2 bis 102-4 auch als Metrologie-Blöcke bezeichnet werden. Wie in Figur 5b schematisch dargestellt, erfolgt zwischen den Metrologie-Blöcken 102-1, 102-2 eine Übertragung des ersten Gesamt-Sendelichts 103-1. Ferner ist in Figur 5b schematisch dargestellt, dass zwischen den Metrologie-Blöcken 102-2, 102-3 eine Übertragung des zweiten Gesamt-Sendelichts 103-2 erfolgt. Analoges gilt für eine Übertragung (bzw. ein Senden) eines dritten und vierten Gesamt-Sendelichts 103-3, 103-4 (vgl. Figur 5b).

Mit Bezug auf Figur 5c kann die Sendeeinheit 102-1 derart ausgebildet sein, dass das erste und zweite Sendelicht 13.1, 13.2 (d. h. das erste Gesamt-Sendelicht 103-1) mit einer vorbestimmten ersten Wellenlänge λ₁ erzeugt wird. Mit Bezug auf Figur 5d kann die erste Sende-Empfangs-Einheit 102-2 derart ausgebildet sein, dass das dritte und vierte Sendelicht (d. h. das zweite Gesamt-Sendelicht 103-2) mit einer vorbestimmten zweiten Wellenlänge λ₂ erzeugt wird. In vorteilhafter Weise sind die vorbestimmte erste Wellenlänge λ₁ und die vorbestimmte zweite Wellenlänge λ₂ voneinander verschieden.

Zum Erzeugen der vorbestimmten ersten und zweiten Wellenlänge λ₁, λ₂ können entsprechende sendeseitige Farbfilter in Lichtausbreitungsrichtung nach der ersten und zweiten Lichtquelle 12.1, 12.2 bzw. in Lichtausbreitungsrichtung nach der dritten und vierten Lichtquelle 12.3, 12.4 angeordnet sein (in Figur 5c und 5d nicht gezeigt).

In analoger Weise können das dritte und vierte Gesamt-Sendelicht 103-3, 103-4 mit einer vorbestimmten dritten bzw. vierten Wellenlänge erzeugt werden. Mit Bezug auf Figur 5b erfolgt somit eine Übertragung (bzw. ein Senden) des ersten bis vierten Gesamt-Sendelichts 103-1 bis 103-4 mit vorbestimmten, jeweils unterschiedlichen Wellenlängen (wobei benachbarte Metrologie-Blöcke jeweils wellenlängenselektiv aufeinander abgestimmt sind). Dadurch wird erreicht, dass der Metrologie-Block 102-2 nur empfindlich auf das erste Gesamt-Sendelicht 103-1 des Metrologie-Blocks 102-1 ist, dass der Metrologie-Block 102-3 nur empfindlich auf das zweite Gesamt-Sendelicht 103-2 des Metrologie-Blocks 102-2 ist, usw.

Die oben genannte Verwendung von vorbestimmten, jeweils unterschiedlichen Wellenlängen für die Metrologie-Kette ist vorteilhaft, wenn beispielsweise gerade so viel Wind auf die Windkraftanlage einströmt und bewirkt wird, dass das Rotorblatt 1 im Wesentlichen gerade ist und das Prebend (vgl. das Bezugszeichen T1 in Figur 1a) vollständig kompensiert wird (bzw. verschwindet). In diesem Fall kann es nämlich vorkommen, dass z. B. der Metrologie-Block 102-3 sowohl das erste Gesamt-Sendelicht 103-1 des Metrologie-Blocks 102-1 als auch das zweite Gesamt-Sendelicht 103-2 des Metrologie-Blocks 102-2 empfängt.

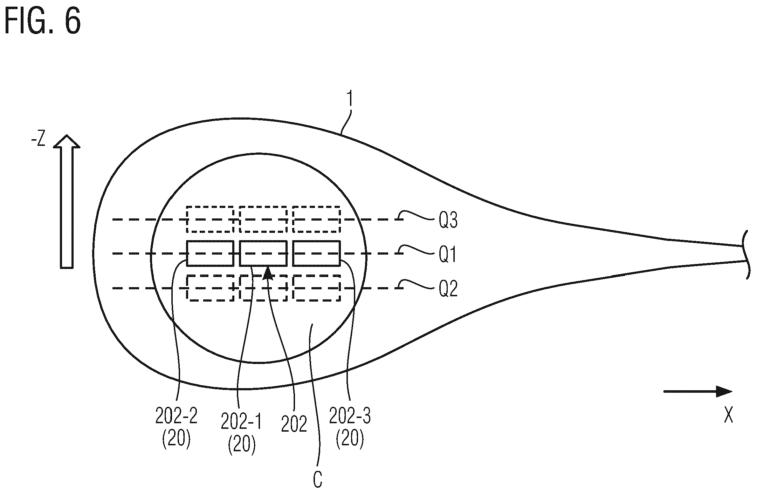

Figur 6 zeigt eine Querschnittsansicht des Rotorblatts 1 nach Figur 5a beispielhaft im Bereich der ersten Sichtlinie A1 mit mehreren in X-Richtung nebeneinander und in Y-Richtung hintereinander angeordneten Empfangseinheiten 202. Die Empfangseinheiten 202 umfassen eine erste bis dritte Empfangseinheit 202-1 bis 202-3, die entlang einer ersten horizontalen Ebene Q1 angeordnet sind. Die erste horizontale Ebene Q1 entspricht einer nominellen Position der Empfangseinheiten 202 bei einer vorbestimmten Windgeschwindigkeit. Ferner sind in Figur 6 eine zweite und dritte horizontale Ebene Q2, Q3 gezeigt. Die zweite horizontale Ebene Q2 entspricht einer Position der Empfangseinheiten 202 bei einer Windgeschwindigkeit, die größer als die vorbestimmte Windgeschwindigkeit ist. Die dritte horizontale Ebene Q3 entspricht einer Position der Empfangseinheiten 202 bei einer Windgeschwindigkeit, die kleiner als die vorbestimmte Windgeschwindigkeit ist. Wie in Figur 6 schematisch dargestellt, liegen die Empfangseinheiten 202 jeweils innerhalb eines Auftreffbereichs C. Der Auftreffbereich C wird durch das erste und zweite Sendelicht 13.1, 13.2 gebildet (vgl. Figur 1b).

Die erste bis dritte Empfangseinheit 202-1 bis 202-3 in Figur 6 entsprechen jeweils der Empfangseinheit 20 in Figur 1b. Die erste bis dritte Empfangseinheit 202-1 bis 202-3 sind an mehreren Positionen entlang der Längserstreckung des Rotorblatts 1 (d. h. in Y-Richtung hintereinander) zur Bildung mehrerer Messpunkte für die Torsionsmessung angeordnet. Dadurch wird eine Torsionsmessung an mehreren Messpunkten innerhalb einer Sichtlinie (d. h. erste Sichtlinie A1 in Figur 5a) bzw. innerhalb eines Segments des Rotorblatts 1 (wobei sich das Segment zwischen der ersten und zweiten Position P1, P2 in Figur 5a erstreckt) möglich.

Durch die oben genannte Anordnung wird erreicht, dass der Empfang des ersten und zweiten Sendelichts 13.1, 13.2 durch die erste bis dritte Empfangseinheit 202-1 bis 202-3 für jede vorbestimmte Biegung T1 des Rotorblatts 1 ermöglicht bzw. beibehalten wird. Dabei sind die erste bis dritte Empfangseinheit 202-1 bis 202-3 insbesondere derart angeordnet, dass sie sich nicht gegenseitig die Sicht zum Sender (d. h. Sendeeinheit 10 in Figur 1b) nehmen.

Beispielsweise sind die erste und/oder zweite Lichtquelle 12.1, 12.2 jeweils eine inkohärente Lichtquelle, vorzugsweise eine LED (z. B. LED mit hoher Leistung), oder ein Laser.

Mit Bezug auf Figur 1b sind die erste Lichtquelle 12.1 und der erste sendeseitige Polarisator 14.1 fest miteinander verbunden. Ferner ist es vorteilhaft, wenn das erste Sendelicht 13.1 eine vergleichsweise kleine Divergenz aufweist, sodass das erste Sendelicht 13.1 im Wesentlichen nur auf das durch das erste und zweite Detektorelement 24.1, 24.2 gebildete Paar (und nicht auf innere Seitenflächen des Rotorblatts 1) trifft. Andererseits sollte die durch die Divergenz bestimmte Empfangsfläche so groß sein, dass das durch das erste und zweite Detektorelement 24.1, 24.2 gebildete Paar, insbesondere bei einer Biegung des Rotorblatts 1, diese Empfangsfläche nicht verlässt.

Beispielsweise bestehen das erste und zweite Detektorelement 24.1, 24.2 jeweils aus einer Photodiode.

Mit Bezug auf Figur 1b sind das erste und zweite Detektorelement 24.1, 24.2 jeweils fest mit dem ersten und zweiten empfangsseitigen Polarisator 22.1, 22.2 verbunden. Das erste und zweite Detektorelement 24.1, 24.2 dienen vorzugsweise zur Erfassung zweier senkrecht zueinander orientierter Polarisationszustände (d. h. Winkel = 90°), z. B. mit s-Pol und p-Pol bezeichnet. Ohne eine Torsion des Rotorblatts 1 ist die Polarisationsrichtung des ersten Sendelichts 13.1 beispielsweise unter einem Winkel von 45° (Referenzwinkel) zur jeweiligen Polarisationsebene des ersten und zweiten empfangsseitigen Polarisators 22.1, 22.2 orientiert. Diese Anordnung ist bezüglich der Auswertung vorteilhaft. Es sind aber auch andere Orientierungen der Polarisationszustände an der Empfangseinheit 20 zwischen den Elementen 22.1, 22.2 (z. B. Winkel ≠ 90°) denkbar.

Das Ausgangssignal S1 stellt ein Maß der ersten Torsion *ϕ*₁ (bzw. ein Maß des Winkels *ϕ*₁ der ersten Torsion) dar. Beispielsweise wird das Ausgangssignal S1 an eine Steuerung der Windkraftanlage übertragen.

Im Folgenden werden nähere Einzelheiten des Betriebs der Sensoranordnung erläutert (vgl. die Auswerteeinheit 26 nach Figur 1b).

Beispielsweise sind das erste und zweite Messsignal 25.1, 25.2 durch folgende Beziehungen gegeben: ${I}_{p} = {αI}_{0} ⋅ {cos}^{2} \left({ϕ}_{1}+\frac{π}{4}\right) + {I}_{Pd}$ (Gl. 1) ${I}_{s} = {βI}_{0} ⋅ {sin}^{2} \left({ϕ}_{1}+\frac{π}{4}\right) + {I}_{Sd}$ (Gl. 2)

Hierbei sind *Iₚ* und *Iₛ* Photoströme (Messsignale) des ersten bzw. zweiten Detektorelements 24.1, 24.2. Die Indizes s und p bezeichnen dabei z. B. orthogonal zueinander stehende Polarisationszustände. Ferner sind *α*, *β* Linearitätskonstanten des ersten bzw. zweiten Detektorelements 24.1, 24.2. Es ist insbesondere anzumerken, dass die Linearitätskonstanten *α , β* unterschiedlich für das erste und zweite Detektorelement 24.1, 24.2 sind (d. h. *α ≠ β*). *I*₀ ist der nominale Photostrom, der vom ersten und zweiten Detektorelement 24.1, 24.2 empfangen wird. *I_{Pd}* und *I_{Sd}* sind Dunkelströme des ersten bzw. zweiten Detektorelements 24.1, 24.2. (Der Winkel *ϕ*₁ entspricht einer durch eine Änderung der ersten Torsion des Rotorblatts 1 hervorgerufenen Polarisationsdrehung bzw. Abweichung des Winkels der Polarisationsrichtung vom Referenzwinkel.)

Die vorgenannten Messsignale *Iₚ* und *Iₛ* werden in einem ersten Schritt abgeglichen. Dazu werden zunächst die Dunkelströme *I_{Pd}* und *I_{Sd}* erfasst (sogenannter Dunkelstromabgleich). Beim Dunkelstromabgleich wird der erste Betriebsmodus aktiviert (d. h. die erste und zweite Lichtquelle 12.1, 12.2 sind ausgeschaltet).

Sind nun die Dunkelströme *I_{Pd}* und *I_{Sd}* bekannt, werden als nächstes die Linearitätskonstanten *α* , *β* der beiden Detektorelemente 24.1, 24.2 ermittelt. Dazu wird der zweite Betriebsmodus aktiviert (d. h. die erste Lichtquelle 12.1 ist ausgeschaltet und die zweite Lichtquelle 12.2 ist eingeschaltet). Durch die beiden Detektorelemente 24.1, 24.2 wird nun eine identische (gleich große) Lichtintensität erfasst, sodass die Messsignale *Iₚ* und *Iₛ* gleich sein müssen. Unterschiede in den Messsignalen *Iₚ* und *Iₛ* werden somit nur durch die Linearitätskonstanten *α*, *β* hervorgerufen und können somit abgeglichen werden.

Durch die Sensoranordnung werden die Messsignale *Iₚ* und *Iₛ* auf denselben Wert skaliert (z. B. Anpassung der Verstärkung oder Skalierung der Photoströme nach einer AD-Wandlung in einem Digitalteil der Auswerteeinheit 26).

Sind die Parameter *α, β, I_{Pd}* und *I_{Sd}* bekannt, so kann man die obigen zwei Beziehungen (Gleichung 1 und 2) vereinfachen: ${I}_{p} = {I}_{0} ⋅ {cos}^{2} \left({ϕ}_{1}+\frac{π}{4}\right)$ (Gl. 3) ${I}_{s} = {I}_{0} ⋅ {sin}^{2} \left({ϕ}_{1}+\frac{π}{4}\right)$ (Gl. 4)

Nun kann in einem zweiten Schritt der normale Betrieb (Torsionsmessung) aufgenommen werden. Dazu wird der dritte Betriebsmodus aktiviert (d. h. die erste Lichtquelle 12.1 ist eingeschaltet und die zweite Lichtquelle 12.2 ist ausgeschaltet). Ferner werden dazu die Differenz und die Summe der Messsignale *Iₚ* und *Iₛ* gebildet und durcheinander geteilt, um das erste Ausgangssignal S1 zu erhalten: $S 1 = \frac{{I}_{p} - {I}_{s}}{{I}_{p} + {I}_{s}} = \frac{{I}_{0} \left[{cos}^{2}\left({ϕ}_{1}+\frac{π}{4}\right)-{sin}^{2}\left({ϕ}_{1}+\frac{π}{4}\right)\right]}{{I}_{0} \left[{cos}^{2}\left({ϕ}_{1}+\frac{π}{4}\right)+{sin}^{2}\left({ϕ}_{1}+\frac{π}{4}\right)\right]}$ (Gl. 5)

Gleichung 5 lässt sich unter Verwendung der bekannten Beziehungen *cos*²ϕ₁ *- sin*²ϕ₁ = cos (2ϕ₁) und *cos*²ϕ₁ *+ sin*²ϕ₁ = 1 umwandeln in: $S 1 = cos \left(2{ϕ}_{1}+\frac{π}{2}\right) = sin \left(2{ϕ}_{1}\right)$ (Gl. 6)

Für kleine Winkel gilt dann die Näherung: $S 1 ∼ 2 {ϕ}_{1}$ (Gl. 7)

Das erste Ausgangssignal S1 stellt also das Maß 2ϕ₁ dar. Insbesondere ist das erste Ausgangssignal S1 proportional zum Doppelten des Winkels *ϕ*₁ der ersten Torsion des Rotorblatts 1. (Der Winkel *ϕ*₁ entspricht insbesondere der ersten Torsion *ϕ*₁.)
Das System 100 nach Figur 1b ist vorzugsweise im Innern des Rotorblatts 1 angeordnet. Alternativ dazu kann das System 100 nach Figur 1b auch außen am Rotorblatt 1 angeordnet sein. Die Sendeeinheit 10 des Systems 100 nach Figur 1b und die Empfangseinheit 20 des Systems 100 nach Figur 1b sind insbesondere starr mit dem Rotorblatt 1 verbunden.

Um eine Störung der Torsionsmessung durch Streulicht innerhalb des Rotorblatts 1 zu vermeiden, sind insbesondere zwei Maßnahmen möglich. Einerseits kann der Dunkelstromabgleich mit einer relativ hohen Rate, z. B. einmal pro Sekunde oder schneller, durchgeführt werden. Somit kann Streulicht, das sich im Prinzip genauso bemerkbar macht wie ein Dunkelstrom, dem Dunkelstrom zugeschrieben und beim Dunkelstromabgleich berücksichtigt und bei der Berechnung des Winkels *ϕ*₁ eliminiert werden.

Andererseits können durch eine vorzugsweise hochfrequente Modulation der ersten und/oder zweiten Lichtquelle 12.1, 12.2 und eine Auswertung der empfangenen Signale (d. h. erstes und zweites moduliertes Messsignal 25.1, 25.2) genau auf dieser Modulationsfrequenz nicht-modulierte Lichtanteile eliminiert werden (sogenanntes Lock-In-Verstärker-Prinzip). Dadurch wird ebenso die oben genannte Störung der Torsionsmessung durch Streulicht vermieden.

Alternativ oder zusätzlich kann die vorgenannte Modulation zur Unterscheidung der Segmente (d. h. Metrologie-Blöcke) entlang der Metrologie-Kette (vgl. Figur 5b) verwendet werden.

Der zuvor erläuterte Abgleich (d. h. oben genannter erster und zweiter Schritt) ist wiederholt (fortlaufend) möglich, indem zwischen dem ersten bis dritten Betriebsmodus zyklisch gewechselt (bzw. umgeschaltet) wird. Dies kann durch eine Modulation (z. B. on-off-keying) der ersten und zweiten Lichtquelle 12.1, 12.2 erfolgen.

Die Erfindung hat insbesondere die folgenden Vorteile. Es gibt eine große Robustheit gegen Umwelteinflüsse, die sich auf die Dunkelströme und Signalamplituden (Parameter *α* , *β*) auswirken, wie Temperatur, Feuchte, Streulicht, Jahreszeiten, etc. Dies folgt aus der Möglichkeit eines Signalabgleichs (d. h. Abgleich der Messsignale *Iₚ* und *Iₛ*). Dieser Signalabgleich ist online, d. h. im Betrieb, insbesondere Langzeitbetrieb, der Windkraftanlage möglich. Es gibt zudem die Möglichkeit einer Torsionsmessung innerhalb des Rotorblatts 1. Dadurch ist die Torsionsmessung unabhängig vom Wetter durchführbar.

Im Vergleich zu bekannten Kamera-basierten Systemen, die auf einer Bilderkennung beruhen und zum Erreichen einer ausreichend hohen Empfindlichkeit relativ große Marken für die Bilderkennung erfordern, wird durch die Erfindung das Problem der mangelnden Kompaktheit dieser Marken vermieden. Durch die Erfindung ist ein kompakterer Aufbau (d. h. kleine Sende- und Empfangseinheit 10, 20) möglich. Dies erleichtert wiederum die Montage bzw. den Einbau der Sensoranordnung. Ferner ermöglicht dies eine Verringerung der Anfälligkeit der Sensoranordnung gegenüber einer Zerstörung durch möglicherweise herunterfallende Fertigungsreste (z. B. Harzklumpen mit bis zu 500 g).

Die Erfindung ermöglicht die Torsionsmessung mit einer relativ hohen Bandbreite (d. h. bis zu mehreren kHz). Im Vergleich hierzu haben die bekannten Kamera-basierten Systeme lediglich eine maximal mögliche Bandbreite im Bereich von 25 Hz bis 50 Hz. Durch die (optionale) Verwendung einer Metrologie-Kette (vgl. Figur 5b) wird die Torsionsmessung zudem unter allen Lastbedingungen (d. h. Durchbiegung des Rotorblatts 1 in positiver/negativer Z-Richtung) erreicht. Des Weiteren ermöglicht die Erfindung die Torsionsmessung unter Verwendung von relativ einfachen, kostengünstigen Komponenten (Lichtquellen, Photodioden, Polarisatoren, etc.). Dies ist insbesondere gegenüber den bekannten Kamera-basierten Systemen mit teuren Kameras und einer aufwendigen (rechenintensiven) Bilderkennung von Vorteil.

Die Sensoranordnung gemäß dem fünften bis neunten Ausführungsbeispiel unterscheidet sich von der Sensoranordnung gemäß dem ersten Ausführungsbeispiel durch die folgenden strukturellen Merkmale: Die Sensoranordnung weist ein in Lichtausbreitungsrichtung nach der ersten Lichtquelle 12.1 angeordnetes strahlteilendes Element 36; 38 zur Aufspaltung eines Strahls α; β; γ des ersten Sendelichts 13.1 zumindest in einen ersten Teilstrahl α1; β1; γ1 und einen zweiten Teilstrahl α2; β2; γ2 auf. Der erste Teilstrahl α1; β1; γ1 und der zweite Teilstrahl α2; β2; γ2 haben eine gleiche Intensität oder ein festes Intensitätsverhältnis zueinander. Das erste Detektorelement 24.1 und das zweite Detektorelement 24.2 sind derart angeordnet und ausgebildet, dass das erste Detektorelement 24.1 den ersten Teilstrahl α1; β1; γ1 empfängt und dass das zweite Detektorelement 24.2 den zweiten Teilstrahl α2; β2; γ2 empfängt.

Unter einem festen Intensitätsverhältnis wird verstanden, dass die Aufspaltung durch das strahlteilende Element 36; 38 in einem für alle Einfallswinkel (z. B. Strahl α; β; γ) gleichen Intensitätsverhältnis (z. B. 47/53) erfolgt. Es ist anzumerken, dass der Strahl α; β; γ einer "Nominal"-Position des Rotorblatts 1 entspricht oder durch eine Verlagerung einer Sendeeinheit (bzw. eines Teils der Sendeeinheit) relativ zu einer Empfangseinheit aufgrund einer Windlast hervorgerufen wird.

Beim fünften bis siebten Ausführungsbeispiel wird durch die Elemente 12.1, 14.1 eine Sendeeinheit 10 gebildet. Beim achten Ausführungsbeispiel wird durch die Elemente 12.1, 14.1 ein erster Teil 10.1 einer Sendeeinheit 10 gebildet. Ferner wird beim achten Ausführungsbeispiel durch eine weitere Lichtquelle ein zweiter Teil 10.2 der Sendeeinheit 10 gebildet. Die Sendeeinheit 10 gemäß dem fünften bis siebten Ausführungsbeispiel und der erste Teil 10.1 der Sendeeinheit 10 gemäß dem achten Ausführungsbeispiel dienen zur Erzeugung des Strahls α; β; γ des ersten Sendelichts 13.1 (vgl. Figur 7 bis 10). In Figur 7 bis 10 ist eine optische Achse O1' gezeigt. Die optische Achse O1' ist jeweils parallel zur dritten Richtung (Y-Richtung) (wobei dies natürlich in einem gebogenen Rotorblatt 1 nicht mehr exakt gilt) und verläuft durch die erste Lichtquelle 12.1.

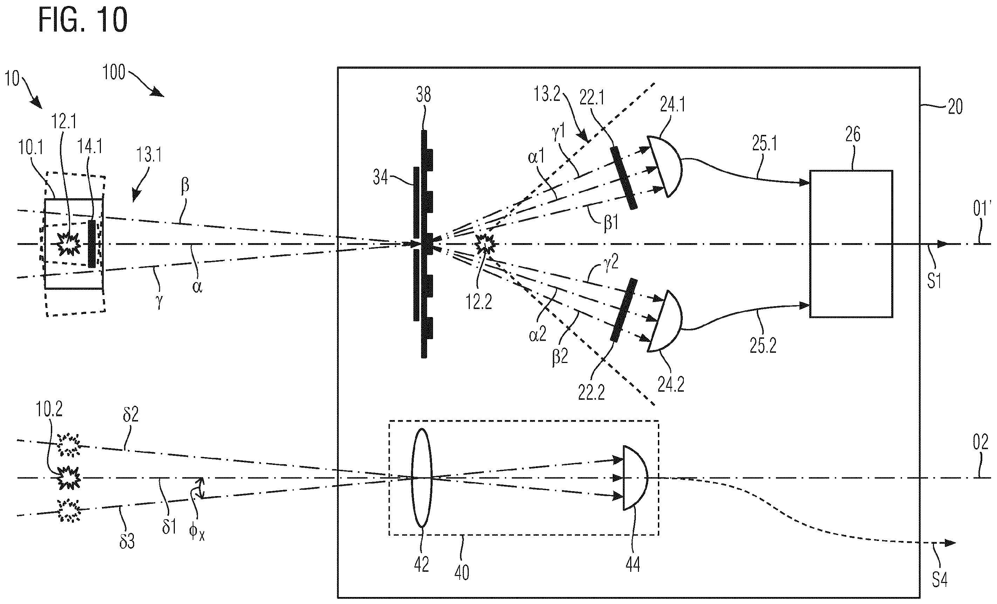

In einer ersten Position der Sendeeinheit 10 nach Figur 7 bis 9 bzw. des ersten Teils 10.1 der Sendeeinheit 10 nach Figur 10 wird der Strahl α erzeugt. In einer zweiten Position der Sendeeinheit 10 nach Figur 7 bis 9 bzw. des ersten Teils 10.1 der Sendeeinheit 10 nach Figur 10 wird der Strahl β erzeugt. In einer dritten Position der Sendeeinheit 10 nach Figur 7 bis 9 bzw. des ersten Teils 10.1 der Sendeeinheit 10 nach Figur 10 wird der Strahl γ erzeugt. Diese erste bis dritte Position entsprechen einer Ausgangsstellung (d. h. nicht gebogener Zustand) bzw. einer jeweils unterschiedlichen Biegung des Rotorblatts 1 in den Freiheitsgraden RX, RZ. Der Strahl α nimmt einen Winkel von 0° in Bezug auf die optische Achse O1' ein. Der Strahl β und der Strahl γ nehmen jeweils einen von 0° verschiedenen Winkel in Bezug auf die optische Achse O1' ein. Der Winkel des Strahls γ wird im Folgenden beispielhaft mit *ϕ*ₓ bezeichnet.

Dabei entspricht der Strahl α der "Nominal"-Position des Rotorblatts 1. Ferner entsprechen der Strahl β und der Strahl γ jeweils Lastzuständen des Rotorblatts 1, die durch einen Winddruck entstehen können.

Durch das strahlteilende Element 36; 38 wird eine Kompensation einer durch das erste und zweite Detektorelement 24.1, 24.2 erfassten Änderung der Lichtintensität aufgrund eines Einflusses eines Winkels eines einfallenden Strahls (d. h. Strahl α; β; γ des ersten Sendelichts 13.1) erreicht. Dadurch können wiederum systematische Fehler der Messung (Torsionsmessung) vermieden oder zumindest verringert werden.

Beim fünften bis neunten Ausführungsbeispiel weist die Sensoranordnung eine in Lichtausbreitungsrichtung vor dem strahlteilenden Element 36; 38 angeordnete Blende 34 auf. Durch das strahlteilende Element 36; 38 in Verbindung mit der Blende 34 wird im Wesentlichen eine sogenannte Einfeld-Abtastung erreicht. D. h., der erste Teilstrahl α1; β1; γ1 und der zweite Teilstrahl α2; β2; γ2 gehen jeweils von einem gemeinsamen Punkt (Schnittpunkt in der Ebene der Blende 34) aus (vgl. Figur 7 bis 10 und 12), sodass ihre Intensitäten im Wesentlichen gleich sind bzw. für jeden Einfallswinkel in einem festen (konstanten) Verhältnis zueinander stehen. Wie in Figur 7 bis 10 und 12 gezeigt, treffen der erste Teilstrahl α1; β1; γ1 und der zweite Teilstrahl α2; β2; γ2 ferner jeweils auf das erste bzw. zweite Detektorelement 24.1, 24.2 auf, ohne dass es zu einer insbesondere asymmetrischen Beschneidung von Strahlprofilen der beiden Teilstrahlen auf den beiden Detektorelementen 24.1, 24.2 kommt. Dadurch wird ein Unterschied zwischen einer durch das erste Detektorelement 24.1 erfassten Lichtintensität und einer durch das zweite Detektorelement 24.2 erfassten Lichtintensität bzw. eine Änderung des Intensitätsverhältnisses vermieden. Dies ermöglicht wiederum eine Vermeidung einer Beeinflussung der Torsionsmessung.

Beim fünften Ausführungsbeispiel ist das strahlteilende Element 36; 38 insbesondere ein nicht-polarisierender Strahlteiler 36 (Neutral-Strahlteiler). Der nicht-polarisierende Strahlteiler 36 dient zur Aufspaltung des Strahls α; β; γ des ersten Sendelichts 13.1. Ferner dient der nicht-polarisierende Strahlteiler 36 zur Einkopplung des zweiten Sendelichts 13.2 der zweiten Lichtquelle 12.2. Die zweite Lichtquelle 12.2 und die beiden Detektorelemente 24.1, 24.2 sind in einer festen Lagebeziehung zueinander angeordnet. Ferner wird beim fünften Ausführungsbeispiel durch die Elemente 24.1, 24.2, 22.1, 22.2, 26, 36, 34 und 12.2 eine Empfangseinheit 20 gebildet.

Alternativ zum nicht-polarisierenden Strahlteiler 36 kann ein PolarisationsStrahlteiler (PBS) eingesetzt werden.

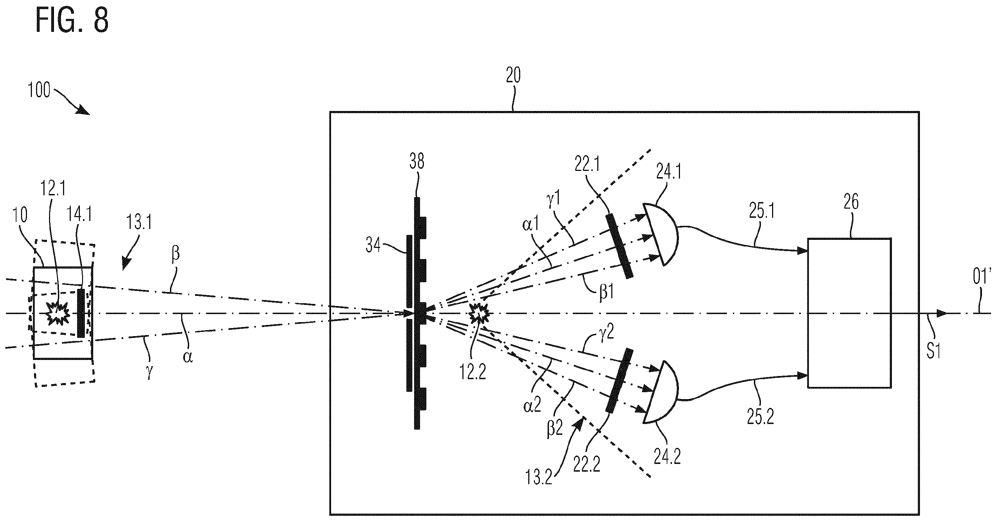

Beim sechsten Ausführungsbeispiel ist das strahlteilende Element 36; 38 insbesondere ein Gitter 38 (Figur 8, Transmissionsgitter). Das Gitter 38 gemäß Figur 8 dient zur Aufspaltung des Strahls α; β; γ des ersten Sendelichts 13.1 in den ersten Teilstrahl α1; β1; γ1 (-1. Beugungsordnung) und den zweiten Teilstrahl α2; β2; γ2 (+1. Beugungsordnung). Vorzugsweise hat das Gitter 38 gemäß Figur 8 eine Strichrichtung, die parallel zur zweiten Richtung (Z-Richtung bzw. Hauptdurchbiegungsrichtung) ist. Ferner ist in diesem Fall die Polarisationsrichtung des linear polarisierten Lichts (d. h. erstes Sendelicht 13.1) ebenfalls parallel zur zweiten Richtung. Dadurch ändert sich das Aufspaltverhältnis des Gitters 38 gemäß Figur 8 zur Erzeugung des ersten Teilstrahls α1; β1; γ1 und des zweiten Teilstrahls α2; β2; γ2 nicht, wenn eine Biegung des Rotorblatts 1 in der zweiten Richtung (Z-Richtung bzw. Hauptdurchbiegungsrichtung) erfolgt. Ferner kann das Gitter 38 gemäß Figur 8 durch eine geeignete Wahl von Gitterparametern derart ausgebildet sein, dass sich das Aufspaltverhältnis bei einer Biegung des Rotorblatts 1 in der ersten Richtung (X-Richtung bzw. Nebendurchbiegungsrichtung) nur wenig ändert, sodass ein Fehlerbeitrag zur Torsionsmessung vernachlässigbar ist.

Wie in Figur 8 gezeigt, ist die zweite Lichtquelle 12.2 zwischen dem Gitter 38 und den beiden Detektorelementen 24.1, 24.2 (bzw. zwischen dem Gitter 38 und den beiden empfangsseitigen Polarisatoren 22.1, 22.2) angeordnet. Der erste Teilstrahl α1; β1; γ1 und der zweite Teilstrahl α2; β2; γ2 liegen in einer ersten Ebene (erste X-Y-Ebene). Die zweite Lichtquelle 12.2 liegt in einer zweiten Ebene (zweite X-Y-Ebene). Die erste X-Y-Ebene und die zweite X-Y-Ebene sind in der zweiten Richtung (Z-Richtung) versetzt zueinander angeordnet. Beispielsweise liegt die erste X-Y-Ebene oberhalb der zweiten X-Y-Ebene. Wie in Figur 8 gezeigt, trifft das zweite Sendelicht 13.2 der zweiten Lichtquelle 12.2 auf die beiden Detektorelemente 24.1, 24.2 auf (wobei sich das zweite Sendelicht 13.2 ausgehend von der zweiten X-Y-Ebene schräg nach oben zu den beiden Detektorelementen 24.1, 24.2 hin ausbreitet). Ferner wird beim sechsten Ausführungsbeispiel durch die Elemente 24.1, 24.2, 22.1, 22.2, 26, 38, 34 und 12.2 eine Empfangseinheit 20 gebildet.

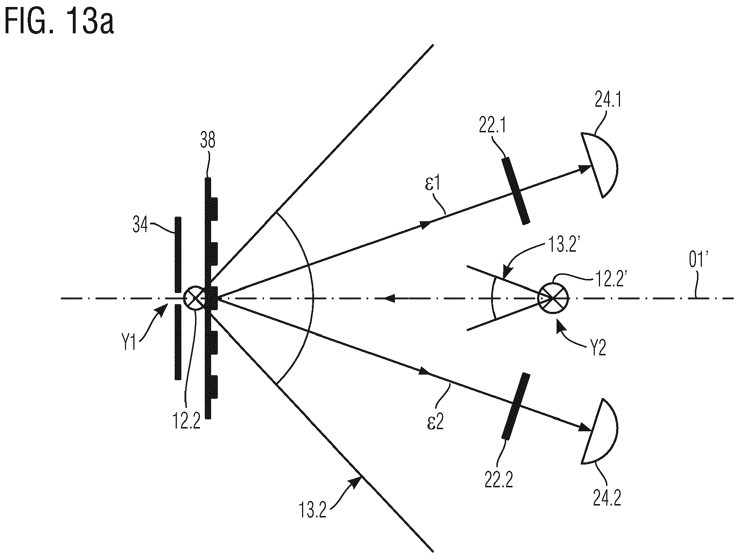

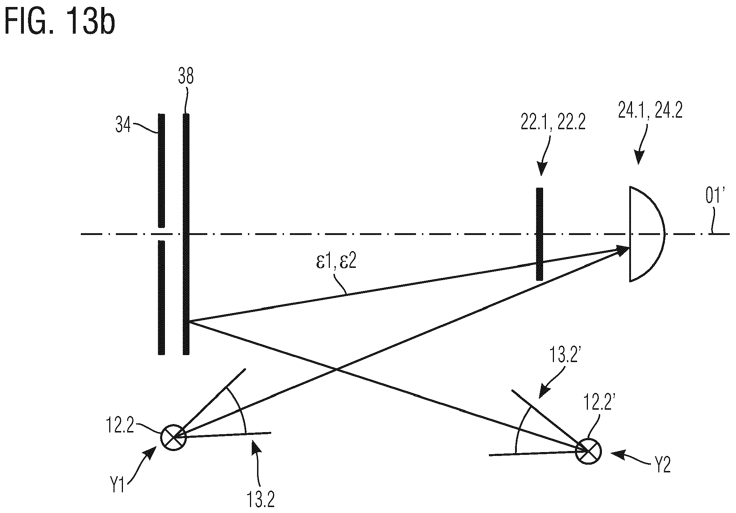

Gemäß Figur 13a kann die zweite Lichtquelle 12.2 der Sensoranordnung nach Figur 8 im Bereich des Gitters 38 (z. B. an der alternativen ersten Position Y1 zwischen der Blende 34 und dem Gitter 38) angeordnet sein. Dabei ist die zweite Lichtquelle 12.2 unterhalb des Bereichs des Gitters 38 angeordnet (vgl. Figur 13b). Wie in Figur 13a schematisch dargestellt, breitet sich das zweite Sendelicht 13.2 der zweiten Lichtquelle 12.2 ausgehend von der ersten Position Y1 in Richtung zu den beiden Detektorelementen 24.1, 24.2 (d. h. in Figur 13a nach rechts) aus. Ferner ist in Figur 13b schematisch dargestellt, dass sich das zweite Sendelicht 13.2 der zweiten Lichtquelle 12.2 ausgehend von der ersten Position Y1 schräg nach oben zu den beiden Detektorelementen 24.1, 24.2 hin ausbreitet.

Gemäß Figur 13a kann die zweite Lichtquelle (hier zweite Lichtquelle 12.2') der Sensoranordnung nach Figur 8 im Bereich der beiden Detektorelemente 24.1, 24.2 (z. B. an der alternativen zweiten Position Y2) angeordnet sein. Dabei ist die zweite Lichtquelle 12.2' unterhalb des Bereichs der beiden Detektorelemente 24.1, 24.2 angeordnet (vgl. Figur 13b). Wie in Figur 13a schematisch dargestellt, breitet sich das zweite Sendelicht (hier zweites Sendelicht 13.2') der zweiten Lichtquelle 12.2' ausgehend von der zweiten Position Y2 in Richtung zum Gitter 38 (d. h. in Figur 13a nach links) aus. Ferner ist in Figur 13b schematisch dargestellt, dass sich das zweite Sendelicht 13.2' der zweiten Lichtquelle 12.2' ausgehend von der zweiten Position Y2 schräg nach oben zum Gitter 38 hin ausbreitet. Durch Reflexion am Gitter 38 werden Teilstrahlen ε1, ε2 erzeugt, die der +1. Beugungsordnung bzw. der -1. Beugungsordnung entsprechen. Der Teilstrahl ε1 breitet sich ausgehend von einem Auftreffpunkt auf dem Gitter 38 in Richtung zum ersten Detektorelement 24.1 (d. h. in Figur 13a nach rechts) aus. Der Teilstrahl ε2 breitet sich ausgehend vom Auftreffpunkt auf dem Gitter 38 in Richtung zum zweiten Detektorelement 24.2 (d. h. in Figur 13a nach rechts) aus. Ferner breiten sich die Teilstrahlen ε1, ε2 jeweils ausgehend vom Gitter 38 schräg nach oben zu den beiden Detektorelementen 24.1, 24.2 hin aus (vgl. Figur 13b).

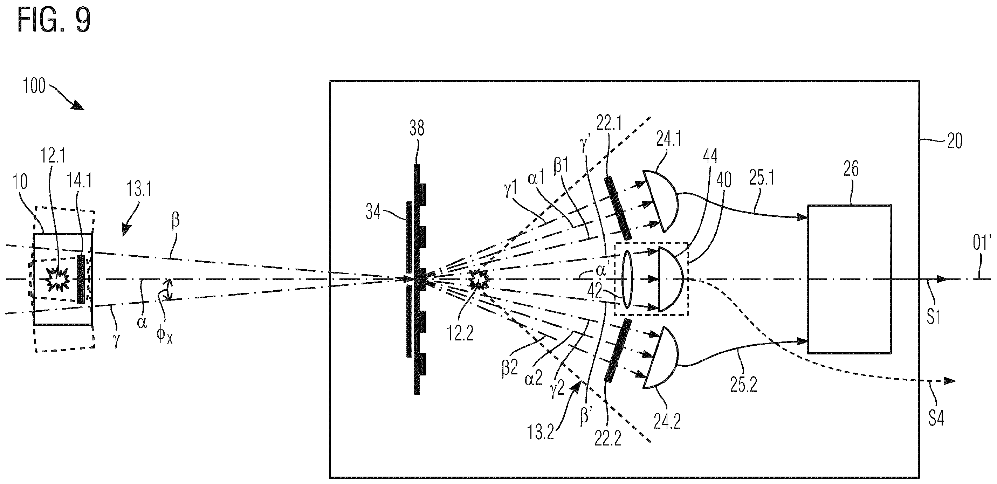

Die Anordnung/Konfiguration der zweiten Lichtquelle 12.2 (bzw. 12.2') gemäß Figur 13a, 13b kann analog in der Sensoranordnung gemäß Figur 9, 10 eingesetzt werden.

Beim siebten Ausführungsbeispiel ist das strahlteilende Element 36; 38 insbesondere ein Gitter 38 (Figur 9, Transmissionsgitter). Das Gitter 38 gemäß Figur 9 dient zur Aufspaltung des Strahls α; β; γ des ersten Sendelichts 13.1 in den ersten Teilstrahl α1; β1; γ1, den zweiten Teilstrahl α2; β2; γ2 und einen zusätzlichen dritten Teilstrahl α'; β'; γ'. Der erste Teilstrahl α1; β1; γ1 entspricht der -1. Beugungsordnung. Der zweite Teilstrahl α2; β2; γ2 entspricht der +1. Beugungsordnung. Der dritte Teilstrahl α'; β'; γ' entspricht der 0. Beugungsordnung. Die Sensoranordnung gemäß Figur 9 weist eine Einheit 40 zum Erfassen eines Winkels des Strahls α; β; γ des ersten Sendelichts 13.1 in Bezug auf die optische Achse O1' auf. Diese Einheit 40 ist zwischen dem ersten und zweiten Detektorelement 24.1, 24.2 angeordnet, sodass sie den dritten Teilstrahl α'; β'; γ' empfängt. Diese Einheit 40 weist eine Linse 42 und eine in Lichtausbreitungsrichtung nach der Linse 42 angeordnete positionsempfindliche Fotodiode (PSD) 44 auf.

Vorzugsweise ist das Gitter 38 gemäß Figur 9 in Bezug auf die Strichrichtung und/oder die Gitterparameter analog zu dem Gitter 38 gemäß Figur 8 ausgebildet. Das PSD 44 ist vorzugsweise ein zweidimensionales (2D-) PSD.

Durch die vorgenannte Einheit 40 wird der Winkel des Strahls α; β; γ (z. B. Winkel *ϕ*ₓ) erfasst und in Form eines Ausgangssignals S4 ausgegeben. Das Ausgangssignal S4 stellt insbesondere ein Maß der Biegung des Rotorblatts 1 (Freiheitsgrade RX, RZ) dar.

Im Übrigen entspricht die Sensoranordnung gemäß dem siebten Ausführungsbeispiel im Wesentlichen der Sensoranordnung gemäß dem sechsten Ausführungsbeispiel. Ferner wird beim siebten Ausführungsbeispiel durch die Elemente 24.1, 24.2, 22.1, 22.2, 26, 38, 34, 40 und 12.2 eine Empfangseinheit 20 gebildet.

Durch das siebte Ausführungsbeispiel wird in vorteilhafter Weise eine Sensoranordnung für eine Kombinationsmessung (d. h. Torsionsmessung im Freiheitsgrad RY in Verbindung mit einer zusätzlichen Messung einer Biegung des Rotorblatts 1 in den Freiheitsgraden RX, RZ) geschaffen. Es ist anzumerken, dass sich das Maß der Biegung in den Freiheitsgraden RX, RZ auf einen (bekannten) Abstand zwischen der Sendeeinheit 10 und der Empfangseinheit 20 bezieht. Wenn die vorgenannte Einheit 40 in mehreren Metrologie-Blöcken einer Metrologie-Kette integriert wird (z. B. analog zum Ausführungsbeispiel gemäß Figur 5a), kann die Kombinationsmessung entlang des Rotorblatts 1 zur vollständigen Erfassung der Torsion/Biegung des Rotorblatts 1 erfolgen.

Das achte Ausführungsbeispiel unterscheidet sich vom sechsten Ausführungsbeispiel dadurch, dass die weitere Lichtquelle als zweiter Teil 10.2 der Sendeeinheit 10 vorgesehen ist (vgl. Figur 10). Durch den zweiten Teil 10.2 (weitere Lichtquelle) verläuft eine weitere optische Achse O2. Ferner ist beim achten Ausführungsbeispiel die Einheit 40 mit der Linse 42 und dem PSD 44 (vgl. siebtes Ausführungsbeispiel) auf der weiteren optischen Achse O2 angeordnet. Beispielsweise dient der zweite Teil 10.2 (weitere Lichtquelle) zum Erzeugen von unpolarisiertem Licht. In einer ersten Position des zweiten Teils 10.2 wird der Strahl δ1 erzeugt. In einer zweiten Position des zweiten Teils 10.2 wird der Strahl δ2 erzeugt. In einer dritten Position des zweiten Teils 10.2 wird der Strahl δ3 erzeugt. Die Ausrichtung (bzw. der Winkel) des Strahls δ1; δ2; δ3 entspricht der Ausrichtung (bzw. des Winkels) des Strahls α; β; γ. Der Winkel des Strahls δ3 wird wiederum beispielhaft mit *ϕ*ₓ bezeichnet. Durch die Einheit 40 gemäß Figur 10 wird z. B. der Winkel des Strahls δ3 (Winkel *ϕ*ₓ) erfasst und in Form des Ausgangssignals S4 ausgegeben. Das Ausgangssignal S4 stellt wiederum das Maß der Biegung des Rotorblatts 1 (Freiheitsgrade RX, RZ) dar.

Vorzugsweise sind die optische Achse O1', die durch die erste Lichtquelle 12.1 des ersten Teils 10.1 der Sendeeinheit 10 verläuft, und die weitere optische Achse O2, die durch den zweiten Teil 10.2 (weitere Lichtquelle) verläuft, parallel zueinander angeordnet.

Beim achten Ausführungsbeispiel wird durch die Elemente 24.1, 24.2, 22.1, 22.2, 26, 38, 34, 40 und 12.2 eine Empfangseinheit 20 gebildet.

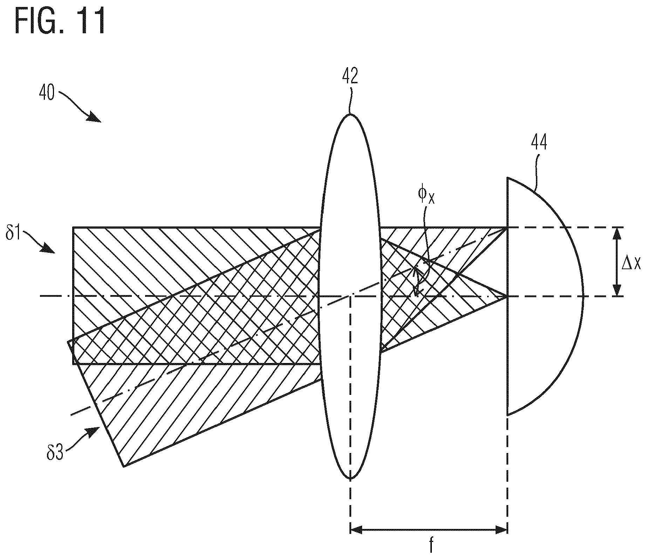

Figur 11 zeigt eine schematische Darstellung der Einheit 40 zum Erfassen eines Winkels (z. B. Winkel *ϕ*ₓ). Die Einheit 40 gemäß Figur 11 entspricht der Einheit 40 der Sensoranordnung gemäß dem siebten oder achten Ausführungsbeispiel (vgl. Figur 9 bzw. 10). In Figur 11 ist ein unter einem Winkel von 0° in Bezug auf eine optische Achse (z. B. optische Achse O2) einfallender erster Strahl (Strahl δ1) und ein unter einem Winkel *ϕ*ₓ in Bezug auf die optische Achse O2 einfallender zweiter Strahl (Strahl δ3) gezeigt. Ferner ist in Figur 11 ein beispielhafter Versatz Δ*x* eines Brennpunkts des einfallenden zweiten Strahls δ3 in einer Fokusebene der Linse 42 gezeigt. Die Linse 42 hat eine Brennweite f. Durch das PSD 44 wird der Versatz Δ*x* in der Fokusebene der Linse 42 erfasst. Über die folgende Beziehung kann dann der Winkel *ϕ*ₓ ermittelt werden: $Δx = {tanϕ}_{x} ⋅ f$ (Gl. 8)

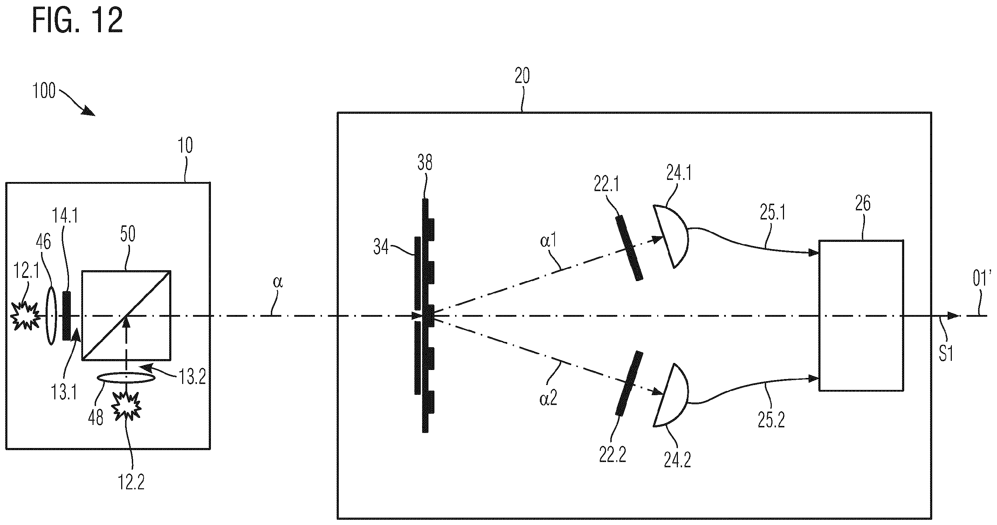

Das neunte Ausführungsbeispiel unterscheidet sich vom sechsten Ausführungsbeispiel dadurch, dass eine Sendeeinheit 10 die erste und zweite Lichtquelle 12.1, 12.2 umfasst. In Lichtausbreitungsrichtung nach der ersten und zweiten Lichtquelle 12.1, 12.2 ist ein Strahlteiler 50 angeordnet. Der Strahlteiler 50 dient dazu, das erste Sendelicht 13.1 der ersten Lichtquelle 12.1 und das zweite Sendelicht 13.2 der zweiten Lichtquelle 12.2 zu vereinigen. Wie in Figur 12 gezeigt, trifft das durch den Strahlteiler 50 vereinigte Licht der Sendeeinheit 10 auf eine Empfangseinheit 20. In Figur 12 ist lediglich der parallel zur optischen Achse O1' verlaufende Strahl α beispielhaft dargestellt.

Beim neunten Ausführungsbeispiel ist zwischen der ersten Lichtquelle 12.1 und dem ersten sendeseitigen Polarisator 14.1 eine Linse 46 angeordnet. Ferner ist beim neunten Ausführungsbeispiel zwischen der zweiten Lichtquelle 12.2 und dem Strahlteiler 50 eine Linse 48 angeordnet.

Beim neunten Ausführungsbeispiel wird durch die Elemente 12.1, 12.2, 14.1, 50, 46, 48 die Sendeeinheit 10 gebildet. Ferner wird beim neunten Ausführungsbeispiel durch die Elemente 24.1, 24.2, 22.1, 22.2, 26, 38, 34 die Empfangseinheit 20 gebildet.

Anstelle der Blende 34 gemäß dem fünften bis neunten Ausführungsbeispiel können auch eine in Lichtausbreitungsrichtung nach dem strahlteilenden Element 36; 38 angeordnete erste und zweite Blende vorgesehen sein (alternative Blendenanordnung). Beispielsweise ist diese erste Blende zwischen dem ersten empfangsseitigen Polarisator 22.1 und dem ersten Detektorelement 24.1 angeordnet. Ferner ist beispielsweise diese zweite Blende zwischen dem zweiten empfangsseitigen Polarisator 22.2 und dem zweiten Detektorelement 24.2 angeordnet. Insbesondere können diese erste und zweite Blende als präzisionsgefertigte Blenden (Aperturen), die jeweils bezüglich der jeweiligen Eingangs-Apertur der beiden Detektorelemente 24.1, 24.2 vollständig symmetrisch sein sollten, ausgebildet sein. Die alternative Blendenanordnung ist gegenüber dem fünften bis neunten Ausführungsbeispiel mit einem etwas höheren Fertigungsaufwand verbunden, aber ansonsten gleichwertig einsetzbar.

Darüber hinaus können anstelle der vorgenannten ersten und zweiten Blende Linsen zur Fokussierung des ersten Teilstrahls α1; β1; γ1 und des zweiten Teilstrahls α2; β2; γ2 vorgesehen sein. Dadurch können die beiden Detektorelemente 24.1, 24.2 kleiner ausgebildet sein. Ferner wird dadurch ein größerer Winkel des einfallenden Strahls (Strahl α; β; γ) ermöglicht, bevor es zu einer Beschneidung auf den beiden Detektorelementen 24.1, 24.2 kommt.

## Patentansprüche

1. Sensoranordnung zum Erfassen mindestens einer ersten Torsion (ϕ₁) eines Rotorblatts (1) einer Windkraftanlage, mit
einer ersten Lichtquelle (12.1) zum Erzeugen von Licht und einem in Lichtausbreitungsrichtung nach der ersten Lichtquelle (12.1) angeordneten ersten sendeseitigen Polarisator (14.1) zum Erzeugen von linear polarisiertem Licht als erstes Sendelicht (13.1),
einem ersten Detektorelement (24.1) und einem zweiten Detektorelement (24.2), wobei das erste Detektorelement (24.1) und das zweite Detektorelement (24.2) derart angeordnet und ausgebildet sind, dass sie zumindest das erste Sendelicht (13.1) empfangen,
einem in Lichtausbreitungsrichtung vor dem ersten Detektorelement (24.1) angeordneten ersten empfangsseitigen Polarisator (22.1) und einem in Lichtausbreitungsrichtung vor dem zweiten Detektorelement (24.2) angeordneten zweiten empfangsseitigen Polarisator (22.2), wobei eine Orientierung einer Polarisationsebene des ersten empfangsseitigen Polarisators (22.1) und eine Orientierung einer Polarisationsebene des zweiten empfangsseitigen Polarisators (22.2) voneinander verschieden sind,
wobei die Sensoranordnung eine zweite Lichtquelle (12.2) zum Erzeugen von unpolarisiertem Licht als zweites Sendelicht (13.2) aufweist,
wobei das erste Detektorelement (24.1) und das zweite Detektorelement (24.2) derart angeordnet und ausgebildet sind, dass sie das zweite Sendelicht (13.2) empfangen,
**dadurch gekennzeichnet, dass** die Sensoranordnung einen ersten bis dritten Betriebsmodus hat, dass die Sensoranordnung dazu ausgebildet ist, zwischen dem ersten bis dritten Betriebsmodus zyklisch umzuschalten, dass im ersten Betriebsmodus die erste und zweite Lichtquelle (12.1, 12.2) ausgeschaltet sind, dass im zweiten Betriebsmodus die erste Lichtquelle (12.1) ausgeschaltet ist und die zweite Lichtquelle (12.2) eingeschaltet ist, und dass im dritten Betriebsmodus die erste Lichtquelle (12.1) eingeschaltet ist und die zweite Lichtquelle (12.2) ausgeschaltet ist,
wobei die zweite Lichtquelle (12.2) dazu ausgebildet ist, im zweiten Betriebsmodus unpolarisiertes Licht zu erzeugen, mit dem ein Abgleich eines von dem ersten Detektorelement (24.1) erzeugten ersten Messsignals und eines von dem zweiten Detektorelement (24.2) erzeugten zweiten Messignals erfolgt, und wobei zwischen der zweiten Lichtquelle (12.2) und einem durch das erste und zweite Detektorelement (24.1, 24.2) gebildeten Paar kein sendeseitiger Polarisator angeordnet ist.

2. Sensoranordnung nach Anspruch 1, wobei die Sensoranordnung einen in Lichtausbreitungsrichtung zumindest nach der ersten Lichtquelle (12.1) angeordneten sendeseitigen Farbfilter (16) und einen in Lichtausbreitungsrichtung vor dem ersten und zweiten Detektorelement (24.1, 24.2) angeordneten empfangsseitigen Farbfilter (21) aufweist, wobei eine Durchlass-Wellenlänge des sendeseitigen Farbfilters (16) und eine Durchlass-Wellenlänge des empfangsseitigen Farbfilters (21) gleich sind.

3. Sensoranordnung nach Anspruch 2, wobei der sendeseitige Farbfilter (16) der ersten und zweiten Lichtquelle (12.1, 12.2) gemeinsam zugeordnet ist.

4. Sensoranordnung nach einem der vorhergehenden Ansprüche, wobei die Sensoranordnung dazu ausgebildet ist, die erste und/oder zweite Lichtquelle (12.1, 12.2) jeweils mit einer vorbestimmten Frequenz zu modulieren, um das erste beziehungsweise zweite Sendelicht (13.1, 13.2) als moduliertes Sendelicht zu erzeugen, um ein von dem ersten Detektorelement (24.1) erzeugtes erstes moduliertes Messsignal (25.1) und ein von dem zweiten Detektorelement (24.2) erzeugtes zweites moduliertes Messsignal (25.2) zu erhalten.

5. Sensoranordnung nach einem der vorhergehenden Ansprüche, wobei die Sensoranordnung einen mit der ersten Lichtquelle (12.1) gekoppelten ersten sendeseitigen Lichtwellenleiter (18.11) und einen mit der zweiten Lichtquelle (12.2) gekoppelten zweiten sendeseitigen Lichtwellenleiter (18.21) aufweist, wobei die Sensoranordnung ein mit dem ersten sendeseitigen Lichtwellenleiter (18.11) gekoppeltes erstes sendeseitiges Linsenelement (18.12) und ein mit dem zweiten sendeseitigen Lichtwellenleiter (18.21) gekoppeltes zweites sendeseitiges Linsenelement (18.22) aufweist, wobei die Sensoranordnung einen mit dem ersten Detektorelement (24.1) gekoppelten ersten empfangsseitigen Lichtwellenleiter (28.11) und einen mit dem zweiten Detektorelement (24.2) gekoppelten zweiten empfangsseitigen Lichtwellenleiter (28.21) aufweist, wobei die erste und zweite Lichtquelle (12.1, 12.2) und das erste und zweite Detektorelement (24.1, 24.2) jeweils außerhalb eines längserstreckten Teils des Rotorblatts (1) angeordnet sind.

6. Sensoranordnung nach einem der vorhergehenden Ansprüche, wobei die Sensoranordnung einen in Lichtausbreitungsrichtung nach der ersten Lichtquelle (12.1) und mit dem ersten sendeseitigen Polarisator (14.1) fest verbundenen Retroreflektor (30) aufweist, wobei die erste Lichtquelle (12.1), das erste Detektorelement (24.1) und das zweite Detektorelement (24.2) in einer ersten Richtung (X) senkrecht zu einer Längsachse (L1) des Rotorblatts (1) nebeneinander angeordnet sind, wobei die zweite Lichtquelle (12.2) zwischen einem durch das erste und zweite Detektorelement (24.1, 24.2) gebildeten Paar und dem Retroreflektor (30) angeordnet ist.

7. Sensoranordnung nach einem der vorhergehenden Ansprüche, wobei die Sensoranordnung eine an einer ersten Position (P1) angeordnete Sendeeinheit (102-1) und mehrere entlang einer Biegelinie des Rotorblatts (1) an einer zweiten bis n-ten Position (P2 - P4) angeordnete Sende-Empfangs-Einheiten (102-2, 102-3, 102-4) aufweist, wobei die Sendeeinheit (102-1) die erste Lichtquelle (12.1), den ersten sendeseitigen Polarisator (14.1) und die zweite Lichtquelle (12.2) umfasst, wobei eine erste Sende-Empfangs-Einheit (102-2) der Sende-Empfangs-Einheiten (102-2, 102-3, 102-4) das erste und zweite Detektorelement (24.1, 24.2) und den ersten und zweiten empfangsseitigen Polarisator (22.1, 22.2) umfasst, wobei die erste Sende-Empfangs-Einheit (102-2) eine dritte Lichtquelle (12.3) zum Erzeugen von Licht und einen in Lichtausbreitungsrichtung nach der dritten Lichtquelle (12.3) angeordneten zweiten sendeseitigen Polarisator (14.2) umfasst, wobei die dritte Lichtquelle (12.3) und der zweite sendeseitige Polarisator (14.2) dazu ausgebildet sind, linear polarisiertes Licht als drittes Sendelicht zu erzeugen, wobei die erste Sende-Empfangs-Einheit (102-2) eine vierte Lichtquelle (12.4) zum Erzeugen von unpolarisiertem Licht als viertes Sendelicht umfasst.

8. Sensoranordnung nach Anspruch 7, wobei die Sendeeinheit (102-1) derart ausgebildet ist, dass das erste und zweite Sendelicht (13.1, 13.2) mit einer vorbestimmten ersten Wellenlänge (λ₁) erzeugt wird, wobei die erste Sende-Empfangs-Einheit (102-2) derart ausgebildet ist, dass das dritte und vierte Sendelicht mit einer vorbestimmten zweiten Wellenlänge (λ₂) erzeugt wird, wobei die vorbestimmte erste Wellenlänge (λ₁) und die vorbestimmte zweite Wellenlänge (λ₂) voneinander verschieden sind.

9. Sensoranordnung nach einem der vorhergehenden Ansprüche, wobei die erste Lichtquelle (12.1) und der erste sendeseitige Polarisator (14.1) dazu ausgebildet sind, das linear polarisierte Licht als erstes Sendelicht (13.1) derart zu erzeugen, dass eine Polarisationsrichtung des linear polarisierten Lichts parallel oder senkrecht zu einer zweiten Richtung (Z) ist, wobei die zweite Richtung (Z) durch eine vorbestimmte Biegung (T1) des Rotorblatts (1) definiert ist.

10. Sensoranordnung nach einem der vorhergehenden Ansprüche, wobei die Sensoranordnung eine Auswerteeinheit (26) zum Erzeugen eines ein Maß der ersten Torsion (ϕ₁) darstellenden Ausgangssignals (S1) in Abhängigkeit eines von dem ersten Detektorelement (24.1) erzeugten ersten Messsignals (25.1) und in Abhängigkeit eines von dem zweiten Detektorelement (24.2) erzeugten zweiten Messsignals (25.2) aufweist.

11. Sensoranordnung nach einem der vorhergehenden Ansprüche, wobei die erste und zweite Lichtquelle (12.1, 12.2) relativ zueinander derart angeordnet sind, dass sie im Wesentlichen in einen gleichen Raumwinkel abstrahlen.

12. Sensoranordnung nach einem der vorhergehenden Ansprüche, wobei die erste und/oder zweite Lichtquelle (12.1, 12.2) jeweils eine inkohärente Lichtquelle, vorzugsweise eine LED, oder ein Laser sind.

13. Sensoranordnung nach einem der vorhergehenden Ansprüche, wobei die Sensoranordnung ein in Lichtausbreitungsrichtung nach der ersten Lichtquelle (12.1) angeordnetes strahlteilendes Element (36; 38) zur Aufspaltung eines Strahls (α; β; γ) des ersten Sendelichts (13.1) zumindest in einen ersten Teilstrahl (α1; β1; γ1) und einen zweiten Teilstrahl (α2; β2; γ2) aufweist, wobei der erste Teilstrahl (α1; β1; γ1) und der zweite Teilstrahl (α2; β2; γ2) eine gleiche Intensität oder ein festes Intensitätsverhältnis zueinander haben, wobei das erste Detektorelement (24.1) und das zweite Detektorelement (24.2) derart angeordnet und ausgebildet sind, dass das erste Detektorelement (24.1) den ersten Teilstrahl (α1; β1; γ1) empfängt und dass das zweite Detektorelement (24.2) den zweiten Teilstrahl (α2; β2; γ2) empfängt.

14. Sensoranordnung nach Anspruch 13, wobei die Sensoranordnung eine in Lichtausbreitungsrichtung vor dem strahlteilenden Element (36; 38) angeordnete Blende (34) aufweist.

15. Sensoranordnung nach Anspruch 13 oder 14, wobei das strahlteilende Element (36; 38) ein nicht-polarisierender Strahlteiler (36) oder ein Gitter (38) ist.

16. Sensoranordnung nach Anspruch 15, wobei das strahlteilende Element (36; 38) das Gitter (38) ist, wobei das Gitter (38) zur Aufspaltung des Strahls (α; β; γ) des ersten Sendelichts (13.1) in den ersten Teilstrahl (α1; β1; y1), den zweiten Teilstrahl (α2; β2; γ2) und einen dritten Teilstrahl (α'; β'; γ') ausgebildet ist, wobei der erste Teilstrahl (α1; β1; γ1) der -1. Beugungsordnung entspricht, wobei der zweite Teilstrahl (α2; β2; γ2) der +1. Beugungsordnung entspricht, wobei der dritte Teilstrahl (α'; β'; γ') der 0. Beugungsordnung entspricht, wobei die Sensoranordnung eine Einheit (40) zum Erfassen eines Winkels des Strahls (α; β; γ) des ersten Sendelichts (13.1) in Bezug auf eine optische Achse (O1') aufweist, wobei diese Einheit (40) zwischen dem ersten und zweiten Detektorelement (24.1, 24.2) angeordnet ist, sodass sie den dritten Teilstrahl (α'; β'; γ') empfängt, wobei diese Einheit (40) eine Linse (42) und eine in Lichtausbreitungsrichtung nach der Linse (42) angeordnete positionsempfindliche Fotodiode (PSD) (44) aufweist.

## Claims

1. Sensor arrangement for detecting at least a first torsion (φ₁) of a rotor blade (1) of a wind power plant, having
a first light source (12.1) for generating light and a first transmitting-side polarizer (14.1), arranged downstream of the first light source (12.1) in the light propagation direction, for generating linearly polarized light as first transmission light (13.1),
a first detector element (24.1) and a second detector element (24.2), wherein the first detector element (24.1) and the second detector element (24.2) are arranged and formed in such a way that they receive at least the first transmission light (13.1),
a first receiving-side polarizer (22.1) arranged upstream of the first detector element (24.1) in the light propagation direction and a second receiving-side polarizer (22.2) arranged upstream of the second detector element (24.2) in the light propagation direction, wherein an orientation of a polarization plane of the first receiving-side polarizer (22.1) and an orientation of a polarization plane of the second receiving-side polarizer (22.2) are different from each other, wherein the sensor arrangement has a second light source (12.2) for generating unpolarized light as second transmission light (13.2),
wherein the first detector element (24.1) and the second detector element (24.2) are arranged and formed in such a way that they receive the second transmission light (13.2),
**characterized in that** the sensor arrangement has a first to third operating mode, **in that** the sensor arrangement is designed to cyclically switch between the first to third operating mode, **in that** in the first operating mode the first and second light sources (12.1, 12.2) are switched off, **in that** in the second operating mode the first light source (12.1) is switched off and the second light source (12.2) is switched on, and **in that** in the third operating mode the first light source (12.1) is switched on and the second light source (12.2) is switched off,
wherein the second light source (12.2) is designed to generate unpolarized light in the second operating mode, which is used to balance a first measurement signal generated by the first detector element (24.1) and a second measurement signal generated by the second detector element (24.2), and
wherein no transmitting-side polarizer is arranged between the second light source (12.2) and a pair formed by the first and second detector elements (24.1, 24.2).

2. Sensor arrangement according to Claim 1, wherein the sensor arrangement has a transmitting-side colour filter (16) arranged at least downstream of the first light source (12.1) in the light propagation direction and a receiving-side colour filter (21) arranged upstream of the first and second detector elements (24.1, 24.2) in the light propagation direction, wherein a transmission wavelength of the transmitting-side colour filter (16) and a transmission wavelength of the receiving-side colour filter (21) are the same.

3. Sensor arrangement according to Claim 2, wherein the transmitting-side colour filter (16) is jointly assigned to the first and second light sources (12.1, 12.2).

4. Sensor arrangement according to one of the preceding claims, wherein the sensor arrangement is designed to modulate the first and/or second light source (12.1, 12.2) in each case with a predetermined frequency in order to generate the first or second transmission light (13.1, 13.2) as modulated transmission light, in order to obtain a first modulated measurement signal (25.1) generated by the first detector element (24.1) and a second modulated measurement signal (25.2) generated by the second detector element (24.2).

5. Sensor arrangement according to one of the preceding claims, wherein the sensor arrangement has a first transmitting-side optical waveguide (18.11) coupled to the first light source (12.1) and a second transmitting-side optical waveguide (18.21) coupled to the second light source (12.2), wherein the sensor arrangement has a first transmitting-side lens element (18.12) coupled to the first transmitting-side optical waveguide (18.11) and a second transmitting-side lens element (18.22) coupled to the second transmitting-side optical waveguide (18.21), wherein the sensor arrangement has a first receiving-side optical waveguide (28.11) coupled to the first detector element (24.1) and a second receiving-side optical waveguide (28.21) coupled to the second detector element (24.2), wherein the first and second light sources (12.1, 12.2) and the first and second detector elements (24.1, 24.2) are each arranged outside an elongated part of the rotor blade (1).

6. Sensor arrangement according to one of the preceding claims, wherein the sensor arrangement has a retroreflector (30) permanently connected downstream of the first light source (12.1) in the light propagation direction and to the first transmitting-side polarizer (14.1), wherein the first light source (12.1), the first detector element (24.1) and the second detector element (24.2) are arranged beside one another in a first direction (X) perpendicular to a longitudinal axis (L1) of the rotor blade (1), wherein the second light source (12.2) is arranged between a pair formed by the first and second detector elements (24.1, 24.2) and the retroreflector (30).

7. Sensor arrangement according to one of the preceding claims, wherein the sensor arrangement has a transmitting unit (102-1) arranged at a first position (P1) and a plurality of transceiving units (102-2, 102-3, 102-4) arranged along a bending line of the rotor blade (1) at a second to n-th position (P2 - P4), wherein the transmitting unit (102-1) comprises the first light source (12.1), the first transmitting-side polarizer (14.1) and the second light source (12.2), wherein a first transceiving unit (102-2) of the transceiving units (102-2, 102-3, 102-4) comprises the first and second detector elements (24.1, 24.2) and the first and second receiving-side polarizers (22.1, 22.2), wherein the first transceiving unit (102-2) comprises a third light source (12.3) for generating light and a second transmitting-side polarizer (14.2) arranged downstream of the third light source (12.3) in the light propagation direction, wherein the third light source (12.3) and the second transmitting-side polarizer (14.2) are designed to generate linearly polarized light as third transmission light, wherein the first transceiving unit (102-2) comprises a fourth light source (12.4) for generating unpolarized light as fourth transmission light.

8. Sensor arrangement according to Claim 7, wherein the transmitting unit (102-1) is designed such that the first and second transmission light (13.1, 13.2) is generated with a predetermined first wavelength (λ₁), wherein the first transceiving unit (102-2) is designed in such a way that the third and fourth transmission light is generated with a predetermined second wavelength (λ₂), wherein the predetermined first wavelength (λ₁) and the predetermined second wavelength (λ₂) are different from each other.

9. Sensor arrangement according to one of the preceding claims, wherein the first light source (12.1) and the first transmitting-side polarizer (14.1) are designed to generate the linearly polarized light as first transmission light (13.1) in such a way that a polarization direction of the linearly polarized light is parallel or perpendicular to a second direction (Z), wherein the second direction (Z) is defined by a predetermined bend (T1) of the rotor blade (1).

10. Sensor arrangement according to one of the preceding claims, wherein the sensor arrangement has an evaluation unit (26) for generating an output signal (S1) representing a measure of the first torsion (φ₁) on the basis of a first measurement signal (25.1) generated by the first detector element (24.1) and on the basis of a second measurement signal (25.2) generated by the second detector element (24.2).

11. Sensor arrangement according to one of the preceding claims, wherein the first and second light sources (12.1, 12.2) are arranged relative to each other in such a way that they emit substantially at the same spatial angle.

12. Sensor arrangement according to one of the preceding claims, wherein the first and/or second light source (12.1, 12.2) is/are each an incoherent light source, preferably an LED, or a laser.

13. Sensor arrangement according to one of the preceding claims, wherein the sensor arrangement has a beam-splitting element (36; 38), arranged downstream of the first light source (12.1) in the light propagation direction, for splitting a beam (α; β; γ) of the first transmission light (13.1) at least into a first partial beam (α1; β1; γ1) and a second partial beam (α2; β2; γ2), wherein the first partial beam (α1; β1; γ1) and the second partial beam (α2; β2; γ2) have the same intensity or a fixed intensity ratio to each other, wherein the first detector element (24.1) and the second detector element (24.2) are arranged and formed in such a way that the first detector element (24.1) receives the first partial beam (α1; β1; γ1) and the second detector element (24.2) receives the second partial beam (α2; β2; γ2).

14. Sensor arrangement according to Claim 13, wherein the sensor arrangement has a stop (34) arranged upstream of the beam-splitting element (36; 38) in the light propagation direction.

15. Sensor arrangement according to Claim 13 or 14, wherein the beam-splitting element (36; 38) is a non-polarizing beam splitter (36) or a grating (38).

16. Sensor arrangement according to Claim 15, wherein the beam-splitting element (36; 38) is the grating (38), wherein the grating (38) is designed to split the beam (α; β; γ) of the first transmission light (13.1) into the first partial beam (α1; β1; γ1), the second partial beam (α2; β2; γ2) and a third partial beam (α'; β'; γ'), wherein the first partial beam (α1; β1; γ1) corresponds to the -1st diffraction order, wherein the second partial beam (α2; β2; γ2) corresponds to +1st diffraction order, wherein the third partial beam (α'; β'; γ') corresponds to the 0th diffraction order, wherein the sensor arrangement has a unit (40) for detecting an angle of the beam (α; β; γ) of the first transmission light (13.1) with respect to an optical axis (O1'), wherein this unit (40) is arranged between the first and second detector elements (24.1, 24.2) so that it receives the third partial beam (α'; β'; γ'), wherein this unit (40) has a lens (42) and a position-sensitive photodiode (PSD) (44) arranged downstream of the lens (42) in the light propagation direction.

## Revendications

1. Ensemble capteur pour détecter au moins une première torsion (φ₁) d'une pale de rotor (1) d'une éolienne, comprenant
une première source lumineuse (12.1) destinée à générer de la lumière et un premier polariseur côté émission (14.1) agencé dans le sens de propagation de la lumière après la première source lumineuse (12.1) pour générer une lumière polarisée linéairement en tant que première lumière d'émission (13.1),
un premier élément détecteur (24.1) et un deuxième élément détecteur (24.2), le premier élément détecteur (24.1) et le deuxième élément détecteur (24.2) étant agencés et conçus de manière à recevoir au moins la première lumière d'émission (13.1),
un premier polariseur côté réception (22.1) agencé dans le sens de propagation de la lumière avant le premier élément détecteur (24.1) et un deuxième polariseur côté réception (22.2) agencé dans le sens de propagation de la lumière avant le deuxième élément détecteur (24.2), une orientation d'un plan de polarisation du premier polariseur côté réception (22.1) et une orientation d'un plan de polarisation du deuxième polariseur côté réception (22.2) étant différentes l'une de l'autre, l'ensemble capteur comportant une deuxième source lumineuse (12.2) destinée à générer une lumière non polarisée en tant que deuxième lumière d'émission (13.2), le premier élément détecteur (24.1) et le deuxième élément détecteur (24.2) étant agencés et conçus de manière à recevoir la deuxième lumière d'émission (13.2), **caractérisé en ce que** l'ensemble capteur possède des premier à troisième modes de fonctionnement, **en ce que** l'ensemble capteur est conçu pour basculer cycliquement entre les premier à troisième modes de fonctionnement, **en ce que**, dans le premier mode de fonctionnement, les première et deuxième sources lumineuses (12.1, 12.2) sont éteintes, **en ce que**, dans le deuxième mode de fonctionnement, la première source lumineuse (12.1) est éteinte et la deuxième source lumineuse (12.2) est allumée et **en ce que**, dans le troisième mode de fonctionnement, la première source lumineuse (12.1) est allumée et la deuxième source lumineuse (12.2) est éteinte,
la deuxième source lumineuse (12.2) étant conçue, dans le deuxième mode de fonctionnement, pour générer une lumière non polarisée avec laquelle une égalisation d'un premier signal de mesure généré par le premier élément détecteur (24.1) et d'un deuxième signal de mesure généré par le deuxième élément détecteur (24.2) est effectuée, et
aucun polariseur côté émission n'étant agencé entre la deuxième source lumineuse (12.2) et une paire formée par les premier et deuxième éléments détecteurs (24.1, 24.2).

2. Ensemble capteur selon la revendication 1, l'ensemble capteur comportant un filtre coloré côté émission (16) agencé dans le sens de propagation de la lumière au moins après la première source lumineuse (12.1) et un filtre coloré côté réception (21) agencé dans le sens de propagation de la lumière avant les premier et deuxième éléments détecteurs (24.1, 24.2), une longueur d'onde de transmission du filtre coloré côté émission (16) et une longueur d'onde de transmission du filtre coloré côté réception (21) étant égales.

3. Ensemble capteur selon la revendication 2, le filtre coloré côté émission (16) étant associé conjointement à la première et à la deuxième source lumineuse (12.1, 12.2).

4. Ensemble capteur selon l'une des revendications précédentes, l'ensemble capteur étant conçu pour moduler la première et/ou la deuxième source lumineuse (12.1, 12.2) respectivement à une fréquence prédéterminée, afin de générer la première ou respectivement la deuxième lumière d'émission (13.1, 13.2) sous forme de lumière d'émission modulée, pour obtenir un premier signal de mesure modulé (25.1) généré par le premier élément détecteur (24.1) et un deuxième signal de mesure modulé (25.2) généré par le deuxième élément détecteur (24.2).

5. Ensemble capteur selon l'une des revendications précédentes, l'ensemble capteur comportant un premier guide d'ondes optiques côté émission (18.11) couplé à la première source lumineuse (12.1) et un deuxième guide d'ondes optiques côté émission (18.21) couplé à la deuxième source lumineuse (12.2), l'ensemble capteur comportant un premier élément de lentille côté émission (18.12) couplé au premier guide d'ondes optiques côté émission (18.11) et un deuxième élément de lentille côté émission (18.22) couplé au deuxième guide d'ondes optiques côté émission (18.21), l'ensemble capteur comportant un premier guide d'ondes optiques côté réception (28.11) couplé au premier élément détecteur (24.1) et un deuxième guide d'ondes optiques côté réception (28.21) couplé au deuxième élément détecteur (24.2), les première et deuxième sources lumineuses (12.1, 12.2) et les premier et deuxième éléments détecteurs (24.1, 24.2) étant respectivement agencés à l'extérieur d'une partie allongée de la pale de rotor (1).

6. Ensemble capteur selon l'une des revendications précédentes, l'ensemble capteur comportant un rétroréflecteur (30) solidement relié au premier polariseur côté émission (14.1) et agencé dans le sens de propagation de la lumière après la première source lumineuse (12.1), la première source lumineuse (12.1), le premier élément détecteur (24.1) et le deuxième élément détecteur (24.2) étant agencés côte à côte dans une première direction (X) perpendiculaire à un axe longitudinal (L1) de la pale de rotor (1), la deuxième source lumineuse (12.2) étant agencée entre une paire formée par les premier et deuxième éléments détecteurs (24.1, 24.2) et le rétroréflecteur (30).

7. Ensemble capteur selon l'une des revendications précédentes, l'ensemble capteur comportant une unité d'émission (102-1) agencée dans une première position (P1) et plusieurs unités d'émission-réception (102-2, 102-3, 102-4) agencées le long d'une ligne de flexion de la pale de rotor (1) dans des deuxième à n-ième positions (P2 - P4), l'unité d'émission (102-1) comprenant la première source lumineuse (12.1), le premier polariseur côté émission (14.1) et la deuxième source lumineuse (12.2), une première unité d'émission-réception (102-2) des unités d'émission-réception (102-2, 102-3, 102-4) comprenant les premier et deuxième éléments détecteurs (24.1, 24.2) et les premier et deuxième polariseurs côté réception (22.1, 22.2), la première unité d'émission-réception (102-2) comprenant une troisième source lumineuse (12.3) destinée à générer de la lumière et un deuxième polariseur côté émission (14.2) agencé dans le sens de propagation de la lumière après la troisième source lumineuse (12.3), la troisième source lumineuse (12.3) et le deuxième polariseur côté émission (14.2) étant conçus pour générer une lumière polarisée linéairement en tant que troisième lumière d'émission, la première unité d'émission-réception (102-2) comprenant une quatrième source lumineuse (12.4) destinée à générer une lumière non polarisée en tant que quatrième lumière d'émission.

8. Ensemble capteur selon la revendication 7, l'unité d'émission (102-1) étant conçue de telle sorte que les première et deuxième lumières d'émission (13.1, 13.2) soient générées avec une première longueur d'onde prédéterminée (λ₁), la première unité d'émission-réception (102-2) étant conçue de telle sorte que les troisième et quatrième lumières d'émission soient générées avec une deuxième longueur d'onde prédéterminée (λ₂), la première longueur d'onde prédéterminée (λ₁) et la deuxième longueur d'onde prédéterminée (λ₂) étant différentes l'une de l'autre.

9. Ensemble capteur selon l'une des revendications précédentes, la première source lumineuse (12.1) et le premier polariseur côté émission (14.1) étant conçus pour générer la lumière polarisée linéairement en tant que première lumière d'émission (13.1) de telle sorte qu'une direction de polarisation de la lumière polarisée linéairement soit parallèle ou perpendiculaire à une deuxième direction (Z), la deuxième direction (Z) étant définie par une flexion prédéterminée (T1) de la pale de rotor (1).

10. Ensemble capteur selon l'une des revendications précédentes, l'ensemble capteur comportant une unité d'évaluation (26) destinée à générer un signal de sortie (S1) représentant une mesure de la première torsion (φ₁) en fonction d'un premier signal de mesure (25.1) généré par le premier élément détecteur (24.1) et en fonction d'un deuxième signal de mesure (25.2) généré par le deuxième élément détecteur (24.2).

11. Ensemble capteur selon l'une des revendications précédentes, les première et deuxième sources lumineuses (12.1, 12.2) étant agencées l'une par rapport à l'autre de telle sorte qu'elles rayonnent sensiblement dans un même angle solide.

12. Ensemble capteur selon l'une des revendications précédentes, la première et/ou la deuxième source lumineuse (12.1, 12.2) étant respectivement une source lumineuse incohérente, de préférence une LED, ou un laser.

13. Ensemble capteur selon l'une des revendications précédentes, l'ensemble capteur comportant un élément de division de faisceau (36 ; 38) agencé dans le sens de propagation de la lumière après la première source lumineuse (12.1) pour diviser un faisceau (α ; β ; γ) de la première lumière d'émission (13.1) au moins en un premier faisceau partiel (α1 ; β1 ; γ1) et un deuxième faisceau partiel (α2 ; β2 ; γ2), le premier faisceau partiel (α1 ; β1 ; γ1) et le deuxième faisceau partiel (α2 ; β2 ; γ2) ayant une même intensité ou un rapport d'intensité fixe l'un par rapport à l'autre, le premier élément détecteur (24.1) et le deuxième élément détecteur (24.2) étant agencés et conçus de telle sorte que le premier élément détecteur (24.1) reçoive le premier faisceau partiel (α1 ; β1 ; γ1) et que le deuxième élément détecteur (24.2) reçoive le deuxième faisceau partiel (α2 ; β2 ; γ2).

14. Ensemble capteur selon la revendication 13, l'ensemble capteur comportant un diaphragme (34) agencé dans le sens de propagation de la lumière avant l'élément de division de faisceau (36 ; 38).

15. Ensemble capteur selon la revendication 13 ou 14, l'élément de division de faisceau (36 ; 38) étant un séparateur de faisceau non polarisant (36) ou un réseau (38).

16. Ensemble capteur selon la revendication 15, l'élément de division de faisceau (36 ; 38) étant le réseau (38), le réseau (38) étant conçu pour diviser le faisceau (α ; β ; γ) de la première lumière d'émission (13.1) en le premier faisceau partiel (α1 ; β1 ; γ1), le deuxième faisceau partiel (α2 ; β2 ; γ2) et un troisième faisceau partiel (α' ; β' ; γ'), le premier faisceau partiel (α1 ; β1 ; γ1) correspondant à l'ordre de diffraction -1, le deuxième faisceau partiel (α2 ; β2 ; γ2) correspondant à l'ordre de diffraction +1, le troisième faisceau partiel (α' ; β' ; γ') correspondant à l'ordre de diffraction 0, l'ensemble capteur comportant une unité (40) destinée à détecter un angle du faisceau (α ; β ; γ) de la première lumière d'émission (13.1) par rapport à un axe optique (O1'), ladite unité (40) étant agencée entre les premier et deuxième éléments détecteurs (24.1, 24.2) de sorte qu'elle reçoive le troisième faisceau partiel (α' ; β' ; γ'), ladite unité (40) comportant une lentille (42) et une photodiode sensible à la position (PSD) (44) agencée dans le sens de propagation de la lumière après la lentille (42).
